# EUROPEAN PATENT SPECIFICATION

(11) **EP 3 887 113 B1**
(45) Date of publication and mention of the grant of the patent: **03.01.2024**
(21) Application number: 19805112.0
(22) Date of filing: 26.11.2019
(51) Int. Cl.: B29B 7/80, B29C 48/255, B29C 48/285, B65G 53/46, B65D 90/58, F16K 5/04, F16K 5/06, B29B 7/24, B29B 7/60

(54) **METERING APPARATUS FOR INGREDIENTS OF COMPOUNDS, IN PARTICULAR FOR TYRES**
DOSIERVORRICHTUNG FÜR ZUTATEN VON MISCHUNGEN, INSBESONDERE FÜR REIFEN
DISPOSITIF DE DOSAGE POUR INGRÉDIENTS DE MÉLANGES, EN PARTICULIER POUR PNEUS

(30) Priority: 28.11.2018 IT 201800010645
(43) Date of publication of application: 06.10.2021
(73) Proprietor: Pirelli Tyre S.p.A., 20126 Milano (IT)
(72) Inventor: COLAMARTINO, Matteo, 20126 Milano (IT); PORTINARI, Gianni Enrico, 20126 Milano (IT); TESTI, Stefano, 20126 Milano (IT); ANFOSSI, Andrea, 20126 Milano (IT)
(74) Representative: Vittorangeli, Lucia
(86) International application number: PCT/IB2019/060169
(87) International publication number: WO 2020/109992

(56) References cited:
- EP-A1- 1 411 330
- EP-A1- 2 412 653
- EP-A2- 0 763 486
- EP-A2- 2 843 271
- WO-A1-2015/063473
- DE-A1- 2 607 686
- GB-A- 833 232
- US-A- 4 130 268
- US-A1- 2012 319 023
- THORSTEN SCHROER ET AL: "Fördern, Dosieren und Mischen", KUNSTSTOFFE, vol. 9, no. 2002, 30 September 2002 (2002-09-30), pages 62-66, XP055506844, München

## Description

The present invention relates to an apparatus for metering ingredients of compounds, in particular for tyres, preferably operating by gravity.

Moreover, the present invention relates to a shutter body.

The term "parallel" must be understood within the limits of tolerances, for example with a variation of +/- 20 degrees with respect to a perfectly parallel orientation. Furthermore, the term "parallel" used with reference to a straight line and to a planar surface indicates both the possibility that the straight line is at a constant distance from the planar surface and the possibility that the straight line lies on the planar surface.

The term "transverse" refers to a perpendicular or oblique arrangement between two physical or geometrical elements. The term "perpendicular" must be understood within the limits of tolerances, for example with a variation of +/- 20 degrees with respect to a perfectly perpendicular orientation.

The terms expressed in ordinal numbers such as for example "first", "second", "third" do not imply the necessity of a sequence or of a functional correlation between the elements thus indicated. Therefore, each element may be provided independently of the others, for example a third motor member may be provided also in the absence of a first motor member and/or of a second motor member.

By the expression "a surface arranged in the proximity of the outlet opening" means a surface placed at a distance from the outlet opening such as to influence the passage of the ingredient therethrough. Preferably, such a surface is located at a distance from the outlet opening, in particular along a direction transverse to the outlet opening, not greater than twice the width, preferably the diameter of the outlet opening. Even more preferably, such a surface is located at a distance from the outlet opening, in particular along a direction transverse to the outlet opening, not greater than the width, preferably the diameter, of the outlet opening.

The term "rotation solid" refers to a figure obtained by rotating a flat region around an axis, on the plane whereof the axis itself lies. A sphere is an example of a rotation solid.

With reference to the production process of a tyre, it begins with the preparation of the compounds adapted to make each component of the tyre on the basis of the specific recipe required. Each compound is prepared in a special rotor mixer, known under the trade name of "Banbury", in which the respective ingredients, for example consisting of elastomers and additives, are introduced.

The ingredients are preliminarily metered inside respective bags according to the specific recipe required. The metering takes place in plants in which an operator manually loads the bag inside a collection container which is made to translate along a loading line, stopping at one or more metering stations comprising metering augers or vibrating channels for collecting the metered ingredient in the bag.

Once filled, the bag is picked up manually by the operator who provides to seal it for transfer to the rotor mixer.

Considering the possible production variations, it is necessary to manage a large number of ingredients (for example thirty ingredients) that differ not only in the composition but also in the physical characteristics. In fact, the ingredients used in the tyre industry may be in different forms such as powders, flakes, pellets, high viscosity liquids (for example oils). Just the wide variability of the form in which the various ingredients necessary for the production of a tyre can be found has required to date the use of different metering stations (augers, vibrating channels) for different types of ingredients. Some of these metering stations have a rather high metering time, slowing down the entire system and requiring manual management with the presence of an operator for loading/unloading the bag.

The Applicant has noted that the metering systems used thus far are not able to simultaneously meet conflicting requirements such as the reduction of the overall metering times and the increase in the accuracy and quality of the metering itself. Furthermore, the Applicant has noted that known systems disperse some of the ingredients into the environment.

In addition to the foregoing, the Applicant has noted that the metering systems used thus far are not very versatile in managing variations related to the quantity of the ingredient to be metered and/or the different shapes or batches of the ingredients to be metered and/or to the environmental variations that may affect the physical characteristics of the ingredients to be metered. This poor versatility is even more significant if it is required that the metering accuracy and quality remain constant despite possible variations, or even increase. These aspects have so far required that each metering station be necessarily dedicated to a single ingredient and that in the same metering plant there were different types of metering stations depending on the ingredient to be metered, preventing a common management that contributed to reconcile the aforementioned conflicting requirements.

US4130268 discloses a rotary valve for powder and granular materials comprising a body and a valve member which, in the closed position, is arranged with a concave internal surface facing towards the flow of material and which, in the open position, is rotated so as to allow the passage of the material through an opening thereof. The convex external surface of the valve member maintains the seal with the valve body as it is not subject to wear, not being in contact with the powder material. The rotary valve described in US4130268 is used in pneumatic conveying systems of powder material.

WO2015/063473 discloses an isolation valve for powder transport systems. A rotatable closing element is shaped like a spherical shell and a pneumatic seal can be activated against the rotatable closing element.

US2004/0079767 discloses a dispensing device for a granular material comprising a rotatable cylindrical rotor provided with an inner pipe made with two elbow sections. The rotor may be replaced to adapt to different types of materials and particle sizes. A rack system rotates the rotor to dispense a certain amount of material. EP2843271 shows another prior art valve. Further known valves have cleaning systems dedicated to the parts most susceptible to wear, such as the outlet opening sealing ring, and/or cleaning nozzles activated outside the metering interval.

The Applicant has perceived that the accuracy and the quality with which the metering of the ingredients is carried out represent parameters capable of affecting the quality of the mixtures and therefore of the final product, in particular of the vulcanised tyre. The Applicant has found that the systems described in US4130268 and WO2015/063473 are implemented to optimise the transport, for example pneumatic, of the materials and therefore do not deal with problems related to the reliability of the metering. The Applicant has also perceived that the accuracy and the quality of the metering may represent an aspect of criticality as it is possible that any problems in the metering step, i.e. in the first production step, for example of a tyre, emerge only at the end of the production process, for example following checks carried out on the vulcanised tyre.

In the Applicant's perception, by intervening on the shape of the shutter body it is possible to combine the aforementioned conflicting requirements of reducing the metering times also and above all for high quantities, increase the accuracy of the metering and obtain quality, avoiding any contamination.

The Applicant has therefore found that, by providing a shutter body made as a portion of a rotation solid in which a passage surface has a cavity, it is possible to prevent the material from packing against the shutter body, obtaining accuracy of the order of 1% also for weights of collected material of the order of some tens of kg, reducing the metering time up to a time of the order of 30", thus being compatible with an automatic management of the bags, reducing the dispersions in the environment and increasing the quality of the metered ingredient, avoiding possible contaminations and allowing the management of any type of ingredients, also viscous and/or in the form of mixtures already prepared, for example mixtures consisting of powders and/or grains dispersed in an oily matrix.

More precisely, according to a first aspect, the present invention relates to a metering apparatus.

Preferably, a storage container is provided, delimiting an internal volume adapted to receive an ingredient of compounds, in particular for tyres.

Preferably, said storage container has an inlet opening and an outlet opening.

Preferably, a shutter body is housed in said outlet opening, rotating around a shutter axis parallel to said outlet opening and preferably staggered with respect thereto.

Preferably, said shutter body is shaped as a portion of a rotation solid.

Preferably, said portion of rotation solid is delimited by a shutter surface having a convex profile facing said internal volume and by a passage surface which cuts said rotation solid at a single edge delimiting the shutter surface and the passage surface. Preferably, said shutter body is rotatable between an angular closed position in which said shutter surface is arranged to completely close the outlet opening, and an angular open position in which said outlet opening is least partially open on said passage surface at an open surface.

Preferably, the passage surface comprises a skirt placed at one end of said shutter surface and partially surrounding a bottom surface from which said skirt rises so as to form a cavity in said passage surface.

The Applicant believes that the choice of the convex shape of the shutter body and the presence of the skirt defining the cavity allow metering in an efficient and quick manner and with very high precision any type of ingredient of compounds, in particular of tyres, avoiding packing. Moreover, the Applicant believes that this aspect provides a universal metering apparatus, adaptable to any type of ingredient (powders, granular or viscous materials) and to possible mixtures of ingredients even of different types, making the control of the parameters influencing the accuracy and the metering time more effective.

According to a second aspect, the present invention relates to a metering plant comprising a plurality of metering apparatuses according to the first aspect. Preferably, each of said metering apparatuses is dedicated to a specific ingredient.

Preferably, said metering apparatuses are arranged so as to arrange each outlet opening at a given height with respect to a supporting plane and define a collection path which extends between an inlet and an outlet.

Preferably, at least one collection station is movable along the collection path.

According to a third aspect, the present invention relates to a shutter body.

Preferably, said shutter body is shaped as a portion of a rotation solid.

Preferably, said portion of rotation solid is delimited by a shutter surface having a convex profile adapted to be facing an ingredient to be metered and by a passage surface which cuts said rotation solid at a single edge delimiting the shutter surface and the passage surface.

Preferably, the passage surface comprises a skirt placed at one end of said shutter surface and partially surrounding a bottom surface from which said skirt rises so as to form a cavity in said passage surface.

The present invention, in at least one of the above aspects thereof, can exhibit at least one of the features described below. Preferably, said portion of rotation solid comprises said shutter axis.

Preferably, said outlet opening has a circular shape.

Preferably, said shutter body is shaped as a sphere portion having a centre arranged on said shutter axis.

Preferably, the bottom surface is a planar surface.

Preferably, said sphere portion comprises said shutter axis.

The Applicant believes that this configuration allows implementing a passage surface defining an outlet chute to facilitate the flow of the ingredient.

Preferably, said skirt has a recess which leads into said cavity.

Preferably, said recess is adapted to form, in at least a position of partial angular opening of the shutter body, an effective portion of the open surface which has a width parallel to the shutter axis, having a value comparable to that of a length, perpendicular to the shutter axis.

Preferably, said recess is formed by a groove leading into said cavity, in which an apex of the groove defines a closing point of the shutter body which, when lying on the plane of the outlet opening, or below it, corresponds to the angular closing position of the shutter body.

Preferably, said groove is formed in a central position of the skirt.

Preferably the thickness of the skirt at the groove is between 1 mm and 10 mm.

Preferably, the shape and dimensions of the groove are a function of the type of ingredients, in particular the shape and size of at least one ingredient in tablets.

The Applicant believes that the presence of a recess, in particular of a groove, widens the field of application of the metering apparatus, simplifying the outlet of the ingredient irrespective of the type thereof and making the same metering apparatus usable for any type of ingredient. Moreover, such a provision allows managing the decrease in the open surface more gradually and in a linear manner, particularly in the last metering step which affects the final accuracy.

Preferably, said cavity is shaped like a wedge.

If the groove is present, the cavity preferably has a maximum depth at the groove. Preferably, the elevation of the skirt with respect to the bottom surface is maximum at the groove and such as to affect at least the entire groove. Preferably, the elevation of the skirt with respect to the bottom surface is minimal, preferably zero, in a zone distal to the groove, even more preferably at an intermediate area of the passage surface so that the cavity is open on the side opposite the groove.

In the case where the groove is not present, preferably the cavity has a maximum depth at a front portion of the edge delimiting the shutter surface and the passage surface. Preferably, the elevation of the skirt with respect to the bottom surface is maximum at the front portion of the edge delimiting the shutter surface and the passage surface. Preferably, the elevation of the skirt with respect to the bottom surface is minimal, preferably zero, in a zone distal to the front portion, for example in an intermediate area of the passage surface so that the cavity is open on the side opposite the front portion. Preferably, an end surface of said skirt is shaped so as to generate, at least in angular positions of the shutter body close to the angular closing position, a circular segment configuration of the open surface of the outlet opening.

Preferably, an end surface of said skirt defines a first planar surface of said passage surface, parallel to the shutter axis. Preferably, said first planar surface is arranged at a distance from the shutter axis equal to about ¾ of the radius of the rotation solid, preferably of the sphere.

The Applicant believes that providing a shutter body having a conformation according to a portion of a rotation solid, preferably a sphere, with a passage surface having a first planar surface arranged in such a position allows regulating the outlet of the ingredient by splitting the outlet opening with different geometries according to the quantity (weight) of ingredient collected in the collection station, in particular according to circular segments.

Preferably, said first planar surface is arranged at a distance from the shutter axis equal to about ¼ of the radius of the rotation solid, preferably of the sphere.

Preferably, said passage surface comprises a second planar surface parallel to the shutter axis and intersecting the first planar surface. Even more preferably, said second planar surface is arranged at a distance from the shutter axis equal to about ¼ of the radius of the rotation solid, preferably of the sphere.

Preferably, said end surface of said skirt defines said first planar surface and said second planar surface.

Preferably, the passage surface comprises a third planar surface parallel to the shutter axis and intersecting the second planar surface. Even more preferably, said third planar surface is arranged at a distance from the shutter axis equal to about ¼ of the radius of the rotation solid, preferably of the sphere.

The Applicant believes that this conformation allows obtaining both a fast outlet of the ingredient in the angular position of maximum opening, and a high degree of precision in the closing step.

Preferably, a scraper device is arranged within said internal volume and has at least one scraping surface configured to scrape a surface of the metering apparatus arranged in the proximity of the outlet opening.

Preferably, said scraping surface is rotatable around a rotation axis preferably transverse to said outlet opening.

Preferably, said at least one scraping surface is counter-shaped with respect to said preferably spherical shutter surface and/or to a scraper ring delimiting the outlet or passage opening and/or internal surfaces of the storage container arranged in the proximity of said outlet or passage opening.

Preferably, a plurality of scraping surfaces preferably distributed around the rotation axis is provided. Even more preferably, at least four scraping surfaces are provided, even more preferably at least six scraping surfaces distributed around the rotation axis.

The Applicant believes that this aspect provides a universal metering apparatus, adaptable to any type of ingredient (powders, granular or viscous materials) and to possible mixtures of ingredients even of different types, making the control of the parameters influencing the accuracy and the metering time more effective. In particular, the scraping is particularly advantageous in the case of powdery and highly packaging materials which tend to adhere to the inner walls of the storage container, around the outlet opening. Such a packing is therefore prevented by scraping both the shutter body and the parts around it, in particular by using tabs and therefore low-thickness scrapers. In this way, the material flows constantly and does not pack. In addition, the scraper device speeds up the final or end metering step, accompanying the material towards the outlet opening.

Further features and advantages will become more apparent from the detailed description of a preferred but non-exclusive embodiment of a metering apparatus for metering ingredients of compound, in particular for tyres according to the present invention.

Such description is given hereinafter with reference to the accompanying drawings, provided only for illustrative and, therefore, non-limiting purposes, in which:
- figure 1 is a schematic lateral view of a metering plant;
- figures 1A and 1B are schematic views of a detail of the plant in figure 1 according to possible embodiments;
- figure 2 is a schematic perspective view of a metering apparatus of ingredients of compounds, in particular for tyres;
- figure 3 is a schematic front view of the metering apparatus in figure 2 in which some elements have been omitted to highlight others;
- figure 4 is sectional view of the metering apparatus in figure 3 according to line IV-IV;
- figures 4A-4E show the detail "X" in figure 4 enlarged and in different operating configurations;

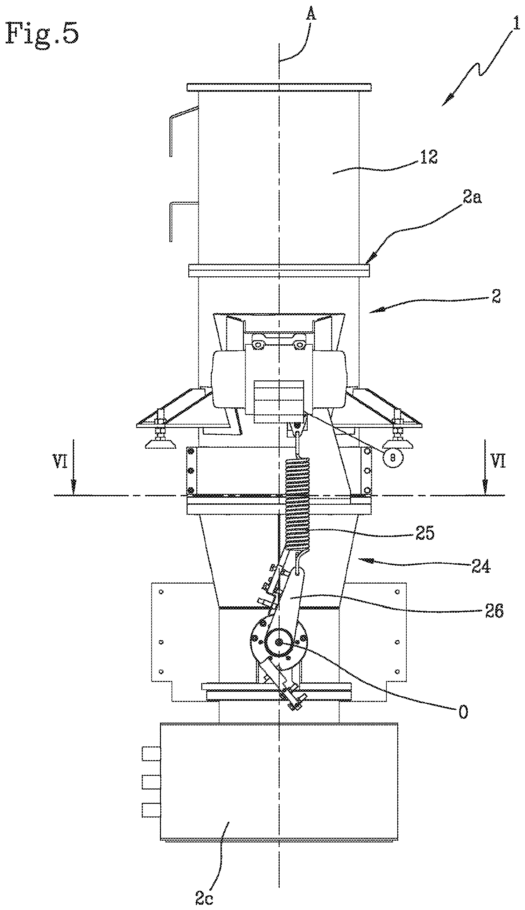

- figure 5 is a lateral view of the metering apparatus in figure 3;

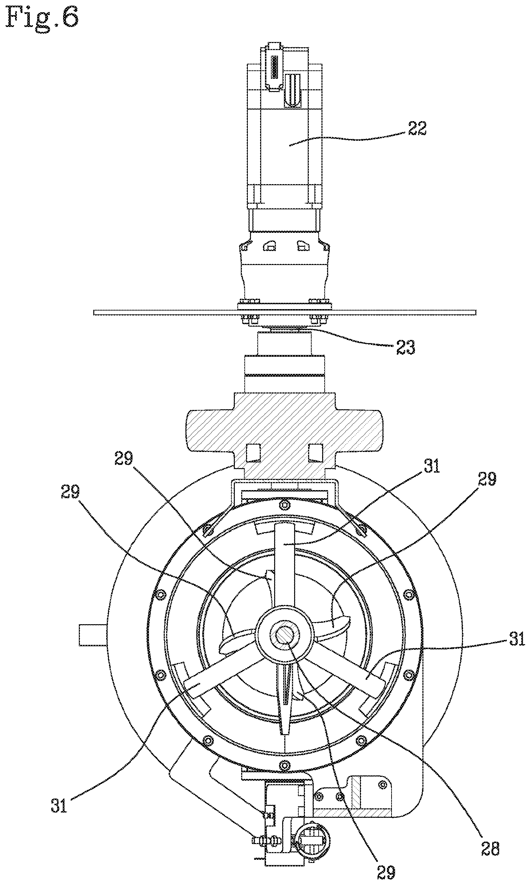

- figure 6 is sectional view of the metering apparatus in figure 5 according to line VI-VI;

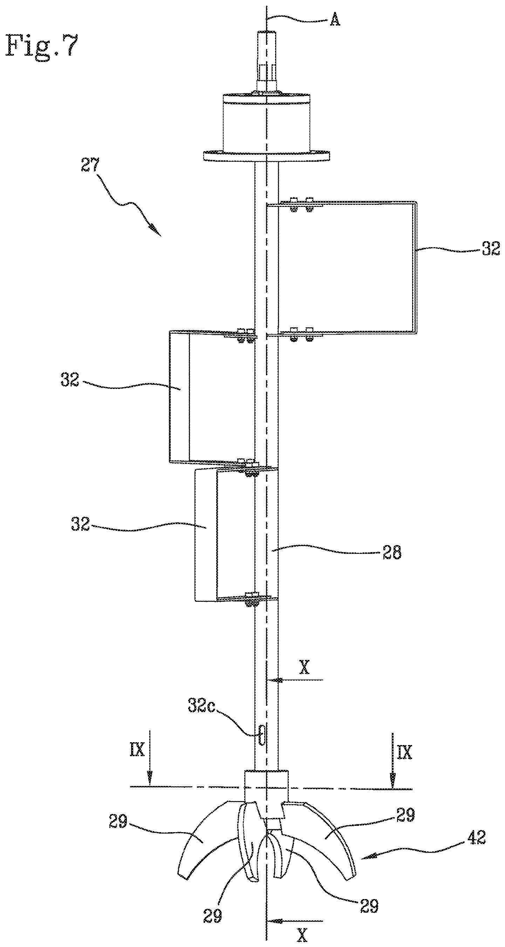

- figure 7 is a schematic perspective view of a further component of the metering apparatus in figure 3;
- figure 8 is a schematic perspective view of an additional element of the further component in figure 7;
- figure 9 is a sectional view of the further component in figure 7 according to line XIV-XIV;
- figure 10 is a sectional view of the further component in figure 7 according to line X-X;
- figure 11 is a side view of a component of the metering apparatus in figure 3 according to a possible embodiment;
- figure 12 is a side view of a component of the metering apparatus in figure 3 according to a possible embodiment;
- figure 13 and figure 14 show a diagram relative to the operation of the metering apparatus, respectively;
- figure 15 schematically shows an open surface of the metering apparatus through which an ingredient to be dispensed flows;
- figures 16A-16D show possible variants of the detail "X" in figure 4A enlarged;
- figure 17 shows a schematic perspective view of a component of the metering apparatus in figure 3 according to a possible embodiment;
- figure 18 is a front view of the component in figure 17;
- figure 19 is a bottom view of the component in figure 17;
- figure 20 is a sectional view of the component in figure 19 according to line XX-XX;
- figure 21 shows a schematic perspective view of a component of the metering apparatus in figure 3 according to a possible embodiment;
- figure 22 is a front view of the component in figure 21;
- figure 23 is a bottom view of the component in figure 21;
- figure 24 is a sectional view of the component in figure 23 according to line XXIV-XXIV;
- figure 25 shows a schematic perspective view of a component of the metering apparatus in figure 3 according to a possible embodiment;
- figure 26 is a front view of the component in figure 25;
- figure 27 is a bottom view of the component in figure 25;
- figure 28 is a sectional view of the component in figure 27 according to line XXVIII-XXVIII.

With reference to the accompanying figures, reference numeral 1 indicates a metering apparatus for metering ingredients of compounds, in particular for tyres.

The metering apparatus comprises a storage container 2 delimiting an internal volume 3 adapted to receive an ingredient of compounds, in particular for tyres. The storage container 2 extends mainly along a longitudinal axis "A" arranged vertically and has an upper section 2a and a bottom 2b. Preferably, the storage container 2 is made of bent plates 4 coupled together by one or more coupling flanges 5. Preferably, the storage container 2 is divided into portions along the longitudinal axis "A", for example an upper portion 6, an intermediate portion 7 and a lower portion 8.

The upper portion 6 comprises the upper section 2a and has a cylindrical shape provided with an enlargement which defines a feeding chute 9 of the storage container 2. The intermediate portion 7 has a frusto-conical shape with a downward decreasing cross-section along the longitudinal axis "A". The lower portion 8 has a cylindrical shape and comprises the bottom 2b.

The storage container 2 has an inlet opening 10 and an outlet opening 11.

The inlet opening 10 is located at the upper section 2a and is for example implemented by an access conduit 12 to the internal volume 3. According to the illustrated example, the inlet opening 10 is arranged laterally with respect to the longitudinal axis "A" at the enlargement of the upper portion 6 so as to face on the feeding chute 9.

Optionally, it is possible to extend the internal volume 3 by connecting an additional storage container to the access conduit 12.

The outlet opening 11 is arranged in the bottom 2b of the storage container 2 and has a circular shape in a substantially horizontal plane. The outlet opening 11 has a diameter preferably comprised between 200 mm and 300 mm.

The bottom 2b is preferably mounted inside the lower portion 8. For example, the bottom 2b comprises a scraper ring 13 mounted inside the lower portion 8 and delimiting the outlet opening 11. The scraper ring 13 may be associated with a support ring 14.

A shutter body 15 is housed in the outlet opening 11 and is rotated about a shutter axis "O" parallel to the plane defined by the outlet opening 11 so that the outlet opening 11 is closed or opened as a function of the angular position of the angular body 15. The shutter axis "O" is preferably offset with respect to the outlet opening 11.

The degree of opening of the outlet opening 11 is defined by the area of an open surface 11a of the outlet opening 11, through which the ingredient flows, which is variable as a function of the angular position of the shutter body 15.

The shutter body 15 housed in the outlet opening 11 provides a metering valve which can be used inside the metering apparatus 1 or in different devices. In the case of the metering apparatus 1, the lower portion 8 of the storage container 2 performs the functions of housing the metering valve and the outlet opening 11 performs the functions of passage opening of the metering valve.

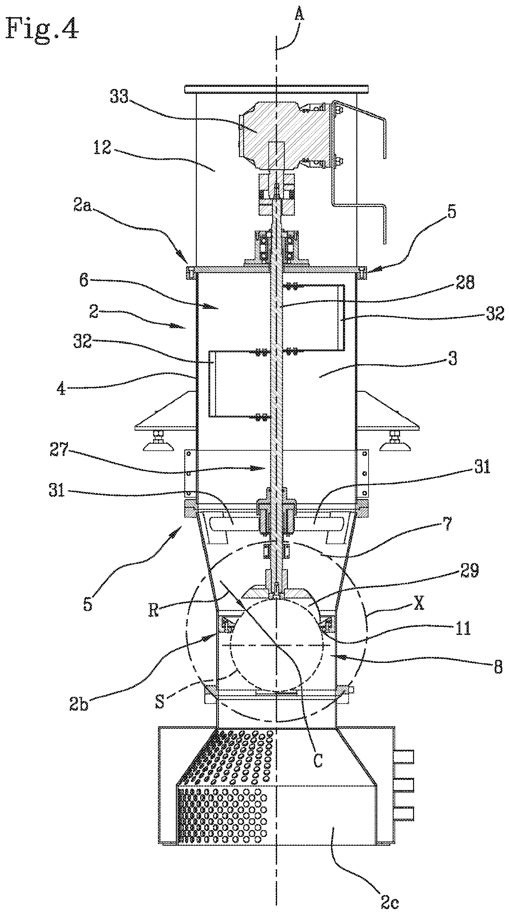

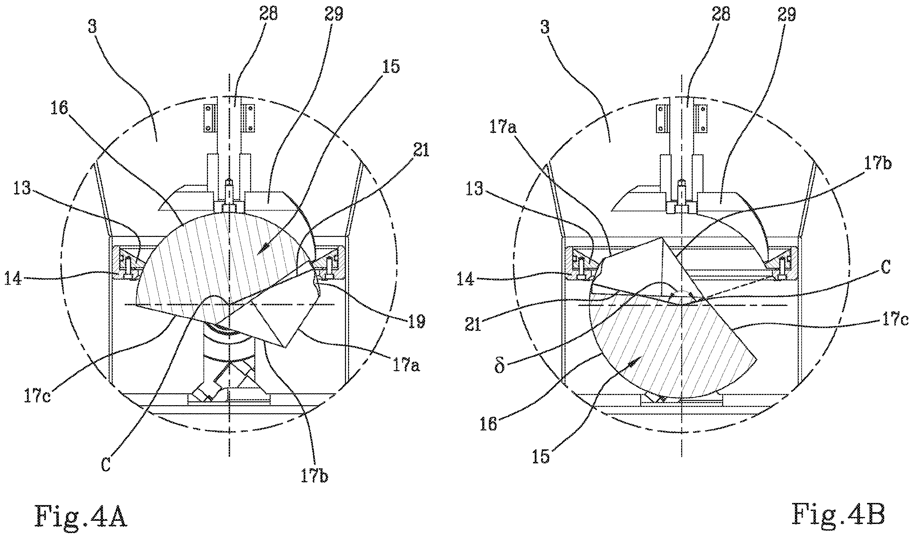

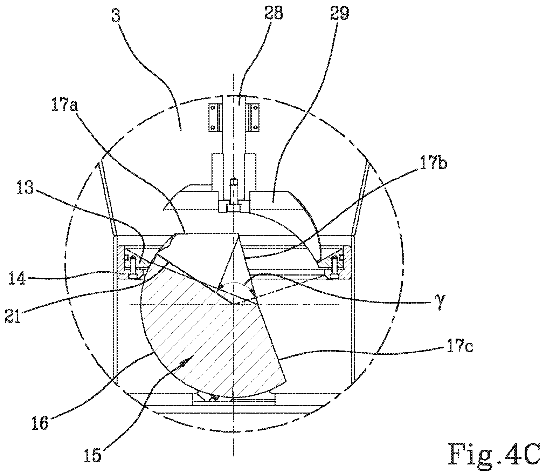

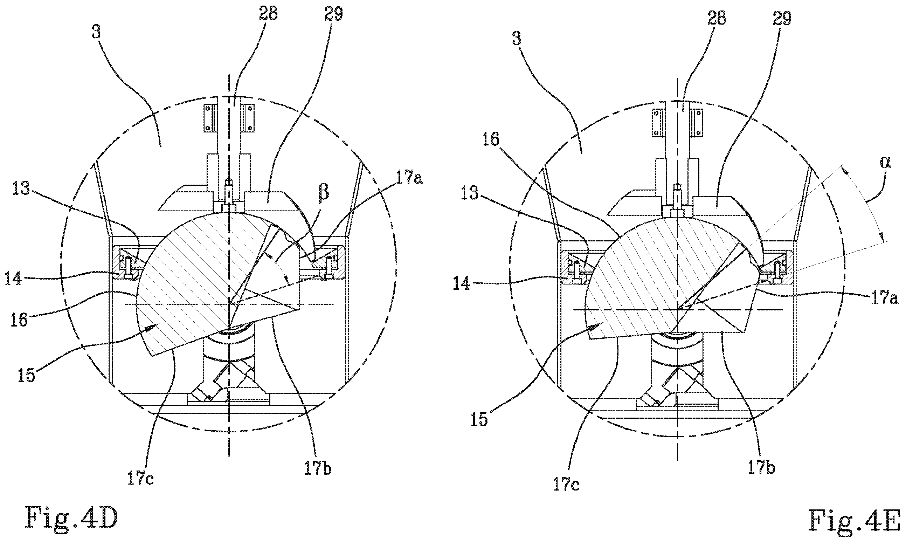

The shutter body 15 is shaped as a sphere portion "S" (indicated by a dashed line in figure 4) having centre "C" arranged on the shutter axis "O" and radius "R" preferably comprised between 105 mm and 160 mm.

The sphere portion which defines the shutter body 15 is delimited on one side by a spherical shutter surface 16 which coincides with the external surface of the sphere and on the other side by a passage surface 17 which cuts the sphere at a single edge 18 delimiting the spherical shutter surface 16 and the passage surface 17.

A front portion 18a of the edge 18 defines a closing zone of the shutter body 15 which, when lying on the plane of the outlet opening 11 or below it, corresponds to the angular closing position of the shutter body.

The sphere portion defining the shutter body 15 comprises the shutter axis "O". In other words, the shutter axis "O" crosses the sphere portion defining the shutter body 15 between the spherical shutter surface 16 and the passage surface 17.

The spherical shutter surface 16 has a convex profile facing the internal volume 3 and therefore towards the ingredient to be metered.

In an angular closing position of the shutter body 15, the spherical shutter surface 16 is arranged to completely close the outlet opening 11. In this angular closing position, the spherical shutter surface 16 defines a spherical cap within which the shutter body 15 moves, assuming, for example, a maximum angular opening position and one or more partial angular opening positions. At least in the maximum angular opening position, the spherical shutter surface 16 can be arranged outside the spherical cap.

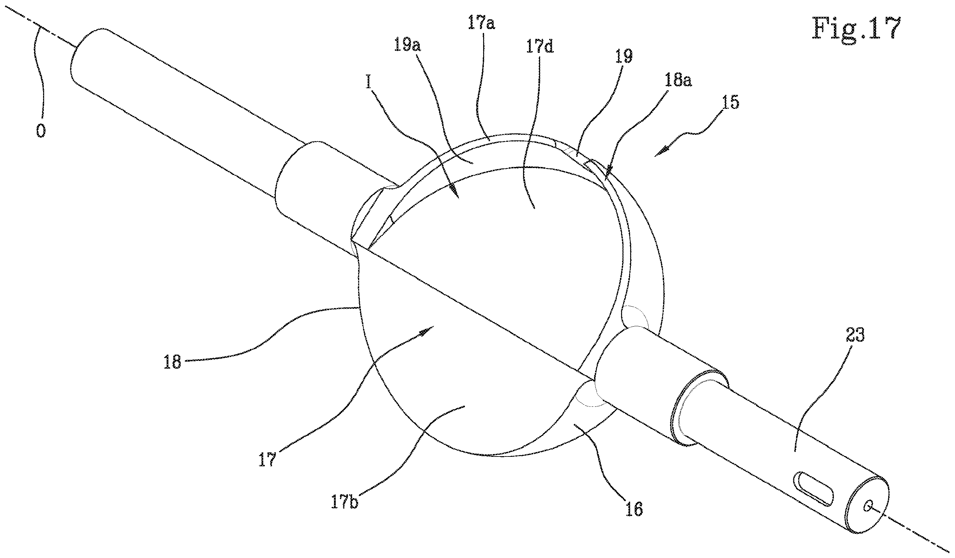

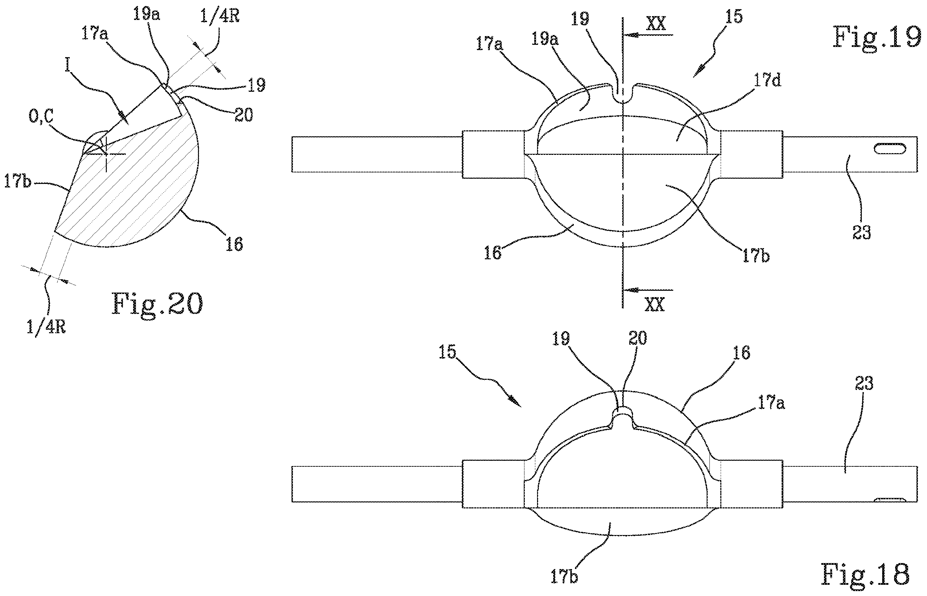

As for example illustrated in detail in figures 17-20, the passage surface 17 comprises a skirt 19a externally delimited by the spherical shutter surface 16.

The skirt 19a partially surrounds a bottom surface 17d from which such a skirt rises so as to form a cavity "I".

The cavity "I" allows limiting the contact between the bottom surface 17d and an ingredient to be metered passing through the open surface 11a of the outlet opening 11.

The bottom surface 17d is preferably planar.

The cavity "I" is preferably shaped like a wedge. In other words, the elevation of the skirt 19a from the bottom surface 17d is preferably maximum at the front portion 18a of the single edge 18 and is minimal, preferably zero, in a zone distal to the front portion, for example in an intermediate area of the passage surface 17 so that the cavity "I" is open on the side opposite the front portion.

An end surface of the skirt 19a defines a first planar surface 17a of the passage surface 17, parallel to the shutter axis "O". With reference to the example illustrated in figures 17-20, the first planar surface 17a is arranged at a distance from the shutter axis "O" equal to about ¼ of the radius of the sphere.

The open surface 11a, in the proximity of the angular closed position, has a wedge configuration.

A groove 19 is formed in the skirt 19a, preferably in a central position, and leads into the cavity "I". The shape and dimensions of the groove 19 are a function of the type of ingredients, in particular the shape and size of at least one ingredient in tablets. The thickness of the skirt 19a at the groove 19 is about 10mm. Preferably, the wedge-shaped cavity "I" has a maximum depth at the groove 19. In other words, the elevation of the skirt 19a from the bottom surface 17d is preferably maximum at the groove 19 and such as to affect the entire groove 19. Moreover, the elevation of the skirt 19a from the bottom surface 17d may be minimal, preferably zero, in a zone distal to the groove 19, for example in an intermediate area of the passage surface 17 so that the cavity "I" is open on the side opposite the groove 19. An apex 20 of the groove 19 defines a closing point of the shutter body 15 which, when lying on the plane of the outlet opening 11 or below it, corresponds to the angular closing position of the shutter body (figure 4A). A radius of the shutter body 15 passing through said apex 20 represents a closing radius 21.

The groove 18 represents a possible embodiment of a recess adapted to implement, in at least a position of partial angular opening of the shutter body 15, an effective portion P1 of the open surface 11a which has a width L1 parallel to the shutter axis "O", having a value comparable to that of a length L2, perpendicular to the shutter axis "O".

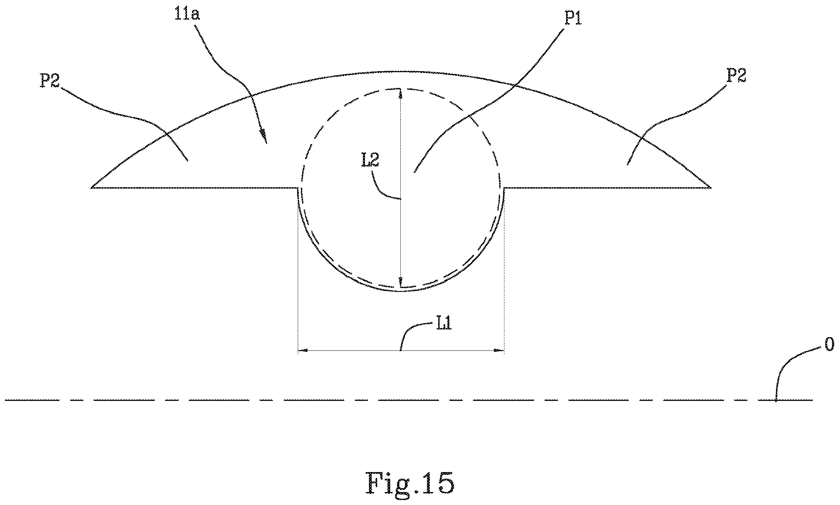

The open surface 11a of the passage opening 11 also has at least one elongated portion P2 in the direction of the shutter axis "O", in particular two elongated portions P2 if the recess is arranged centrally to the skirt 19a. Figure 15 schematically shows the passage opening 11a in a position of partial angular opening of the shutter body 15, close to closing.

Preferably, the passage surface 17 comprises a second planar surface 17b parallel to the shutter axis "O", arranged at a distance from the shutter axis "O" equal to about ¼ of the radius "R" of the sphere and intersecting the first planar surface 17a. According to the example shown in figures 17-20, the skirt 19a terminates at the intersection between the first planar surface 17a and the second planar surface 17b. In other words, the elevation of the skirt 19a from the bottom surface 17d is zero at the intersection between the first planar surface 17a and the second planar surface 17b so that the cavity "I" is open on the second planar surface 17b.

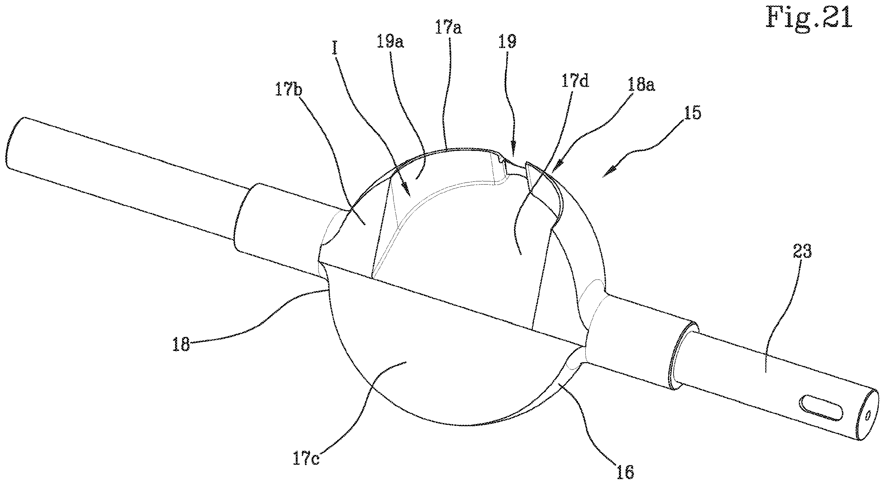

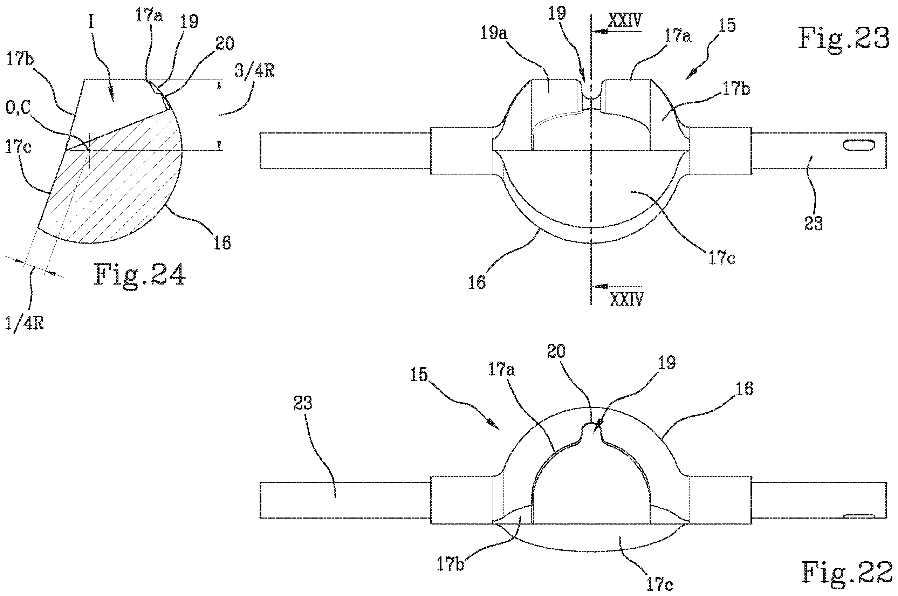

According to a different embodiment, for example illustrated in figures 21-24, the end surface of the skirt 19a defines both the first planar surface 17a and the second planar surface 17b.

The passage surface 17 preferably comprises a third planar surface 17c parallel to the shutter axis "O" and intersecting the second planar surface 17b.

According to the example illustrated in figures 21-24, the first planar surface 17a is arranged at a distance from the shutter axis "O" equal to about 3/4 of the radius "R" of the sphere. Moreover, the third planar surface 17c is preferably arranged at a distance from the shutter axis equal to about ¼ of the radius "R" of the rotation solid, preferably of the sphere.

Also in this case, the groove 19 centrally formed in the skirt 19a is preferably provided. In addition, the cavity "I" into which the groove 19 leads is provided.

The thickness of the skirt 19a at the groove 19 is about 1-4mm and corresponds to a reduced thickness of the groove 19 with respect to the previously described embodiment.

The elevation of the skirt 19a from the bottom surface 17d is preferably maximum at the groove 19 and such as to affect at least the entire groove 19. In other words, the skirt 19a preferably extends slightly beyond the apex 20 of the groove 19. The elevation of the skirt 19a from the bottom surface 17d may be minimal, preferably zero, in the intersection area between the second planar surface 17b and the third planar surface 17c so that the cavity "I" is open on the third planar surface 17c.

The groove 19 performs the functions described above at the open surface 11a which, in the proximity of the angular closed position, has a circular segment configuration as illustrated in figure 15.

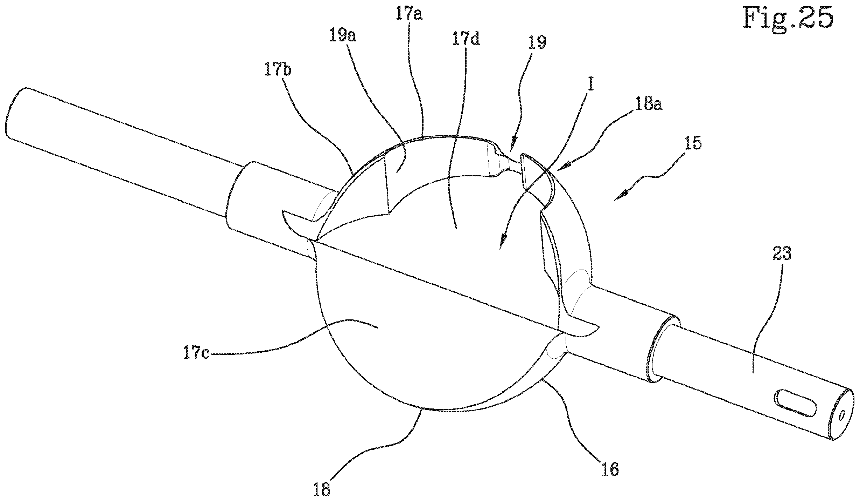

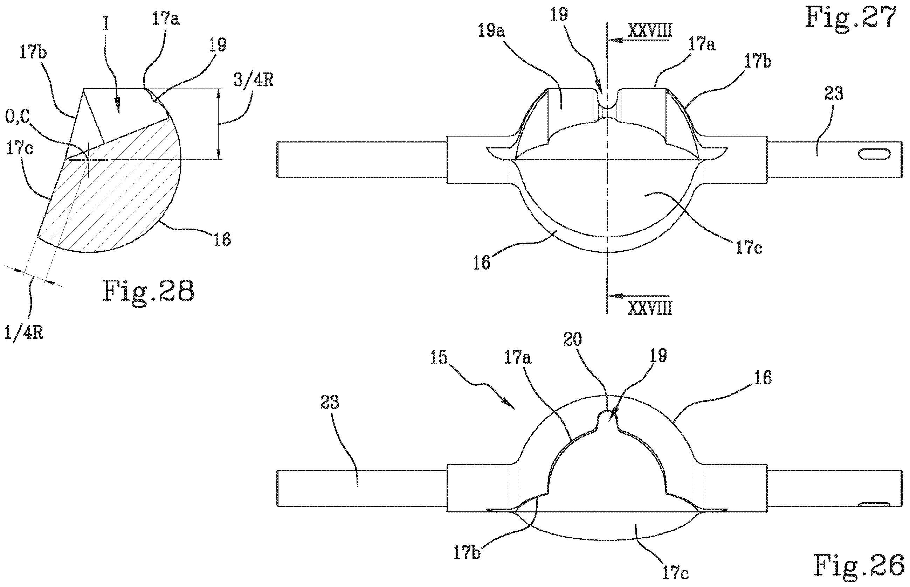

A further embodiment is illustrated in figures 25-28. This is a shutter body 15 similar to that shown in figures 21-24 which is differs in the shape of the skirt 19a which generates a cavity "I" which widens along the shutter axis "O" in a zone distal from the groove 19.

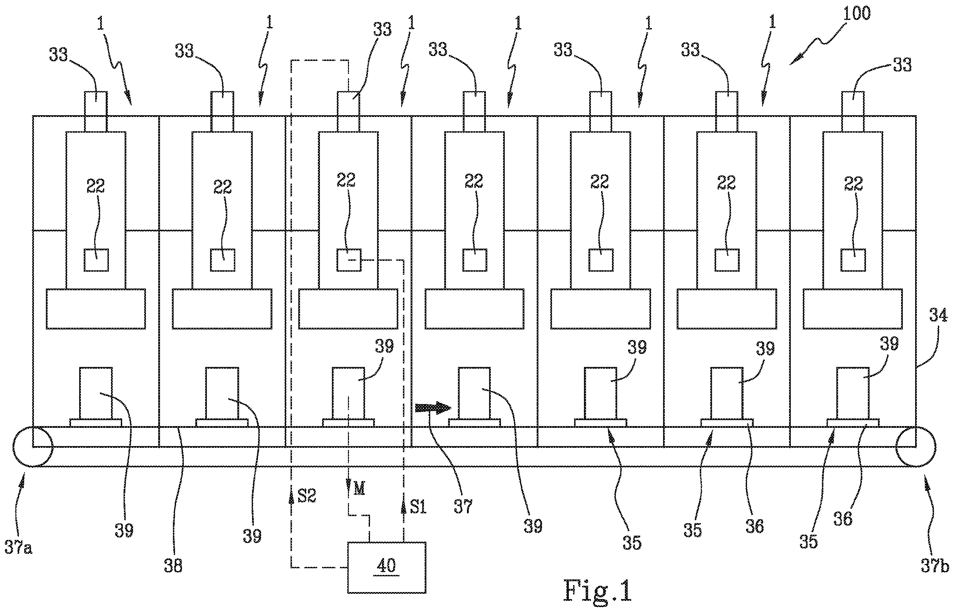

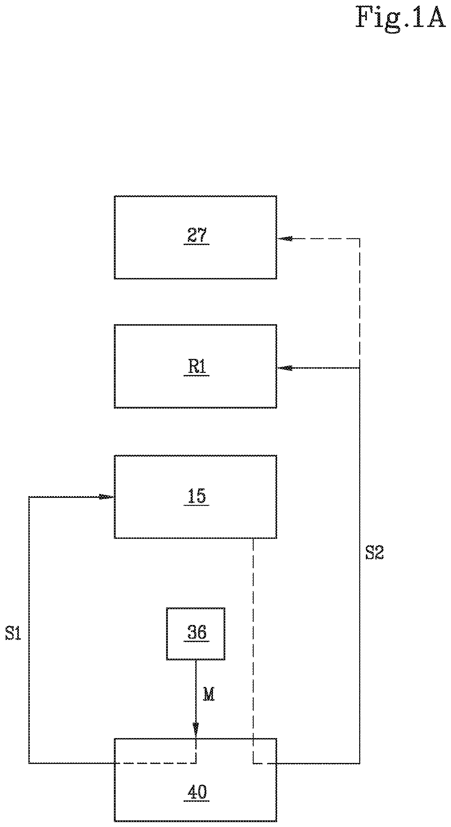

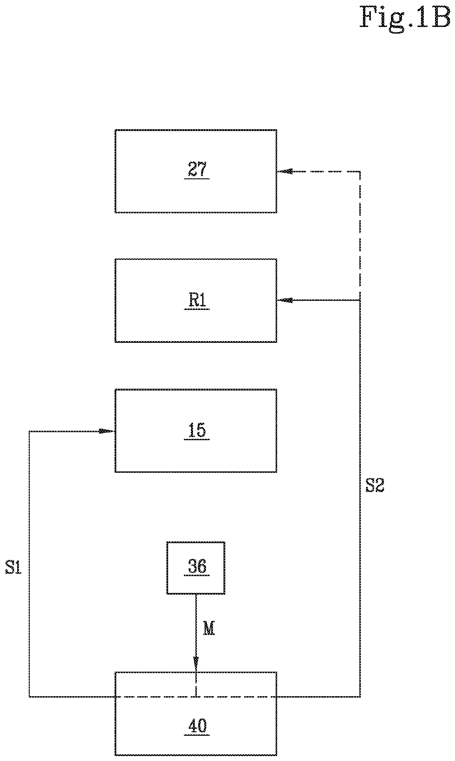

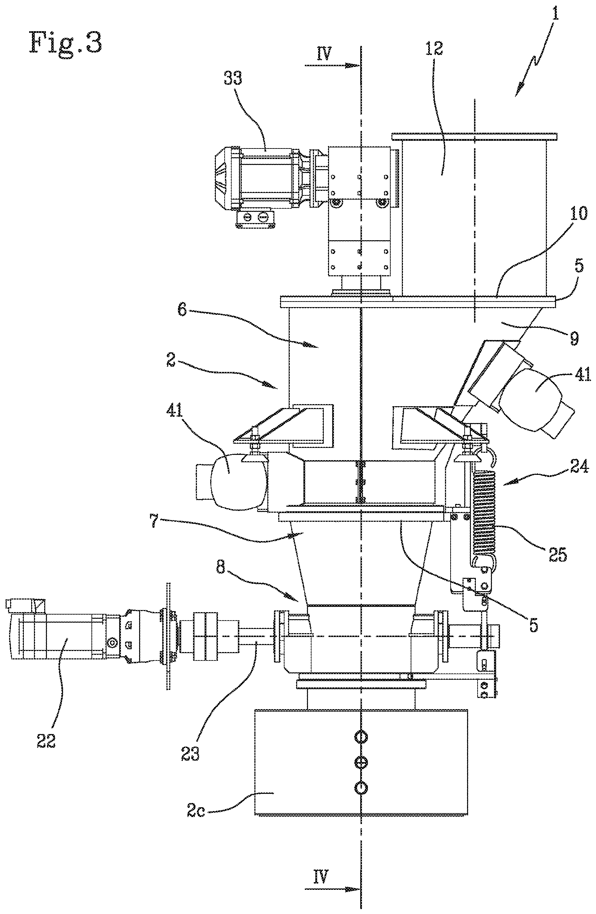

As for example shown in figures 1-3, a first motor member 22, preferably of the reversible type, is operatively connected to the shutter body 15 to cause the rotation thereof about the shutter axis "O" between the angular closing position and a maximum angular opening position and vice versa. The first motor member 22 may be implemented by means of an asynchronous or brushless motor, for example directly keyed onto a shutter shaft 23 defining the shutter axis "O" and carrying the shutter body 15. Alternatively, other drives may be provided, for example oleodynamic.

Preferably, the metering apparatus 1 comprises a safety device 24 configured for causing the automatic closing of the outlet opening 11 bringing the shutter body 15 back to an angular closing position in case of faults. For example, an elastic element 25 is operatively active on the shutter member 15 to bring it back to the angular closing position. According to a possible example, the elastic element 25 in the form of a helical spring is interposed between the shutter shaft 23 and a frame of the metering apparatus 1 preferably by means of a lever 26.

The safety device 24 may be associated with position sensors and/or mechanical stops configured and arranged so as to mechanically define the angular the end-of-travel and/or closing position of the shutter body 15.

The metering apparatus 1 comprises a stirrer 27 arranged inside the storage container 2, in particular in the internal volume 3. The stirrer 27 is rotatable about a rotation axis substantially coinciding with the longitudinal axis "A". Such a rotation axis "A" is perpendicular to the outlet opening 11.

The stirrer 27 comprises a central shaft 28 defining the rotation axis "A" and at least one blade 29 which extends radially from the central shaft 28 and comprises a scraping surface R1.

The scraping surface R1 is counter-shaped with respect to the spherical shutter surface 16 and is active on at least a portion thereof following the rotation of the stirrer 27 about the rotation axis "A".

In the illustrated example there are provided four blades 29 uniformly distributed around the central shaft 28 and active on the spherical shutter surface 16.

Each blade 29 extends from the central shaft 28, in particular from a lower end thereof, and has an arcuate conformation adapted to superiorly enclose a portion of the spherical shutter surface 16. In other words, each blade 29 follows the profile of the spherical shutter surface 16 in a curved manner along the whole distance between the central shaft 28 and the outlet opening 11. The extension of each blade 29 is such as to cover a section comprised between the central shaft 28 and the scraper ring 13.

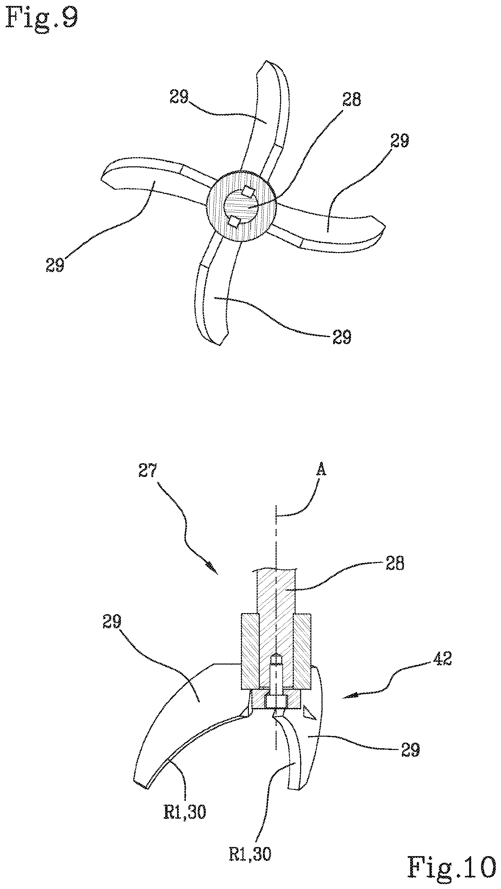

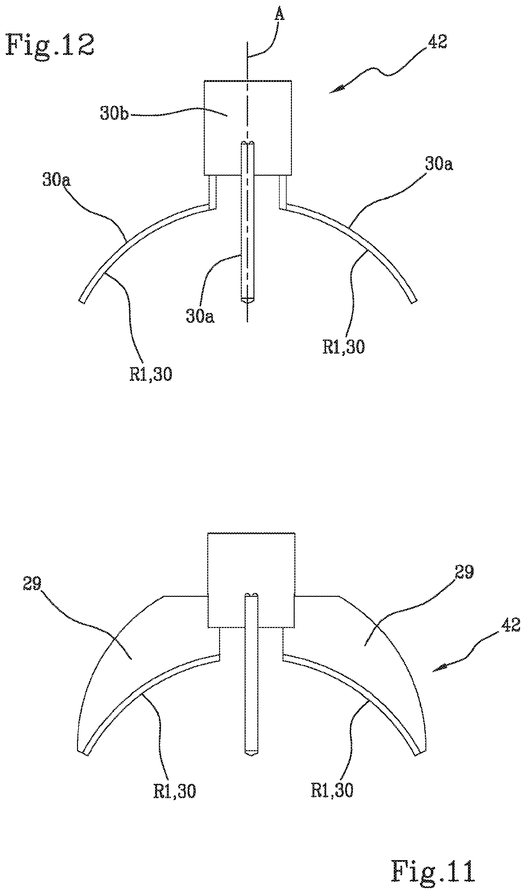

In other words, as illustrated for example in figure 9, the blades 29 have a tilted orientation with respect to a direction radial to the rotation axis "A" to influence the fall of the ingredient away from the outlet opening 11 or towards the outlet opening 11 (depending on the tilting angle and the direction of rotation of the blades 29). Alternatively, as for example illustrated in figure 11, the blades 29 may be oriented according to a radial plane, partially covering a meridian of the sphere portion which defines the shutter body 15.

The distance between each blade 29, in particular each scraping surface R1, and the spherical shutter surface 16 is given by the compromise between the need for an effective scraping and accompanying effect of the material and the need to obtain the correct movement of the shutter body and of the stirrer. Preferably, such a distance is less than 5 mm, preferably between 0.2 mm and 0.4 mm.

Supporting spokes 31 for example arranged transversely to the rotation axis "A" may be provided inside the storage container 2 to support the central shaft 28.

The stirrer 27 may further comprise at least one remixing arm 32 which extends radially from the central shaft 28 to a determined distance from the blade 29 along the rotation axis "A". In particular, the remixing arm 32 is arranged in an intermediate position of the central shaft 28, above the blade 29. Two or more remixing arms 32 may be provided, arranged staggered along the rotation axis "A" and/or around the rotation axis "A".

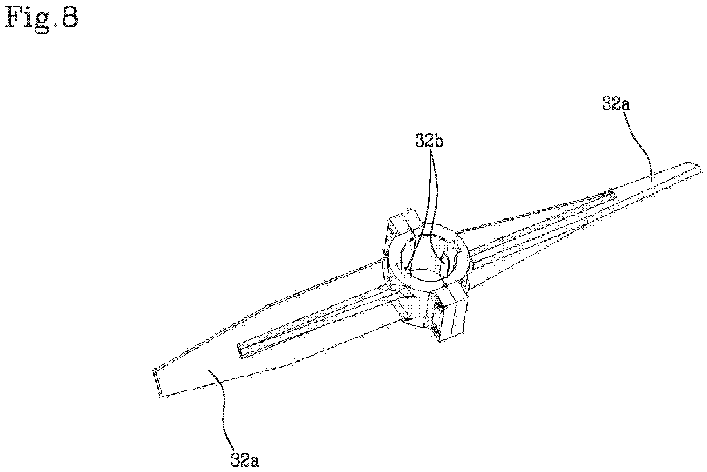

The stirrer 27 may further comprise at least one mixing paddle 32a having a tilted orientation with respect to the rotation axis "A" to influence the fall of the ingredient away from the outlet opening 11 or towards the outlet opening 11 (depending on the tilting angle and the direction of rotation of the mixing paddle). Figure 8 shows two mixing paddles 32a adapted to be connected to the central shaft 28 so as to rotate integral with the blades 29 by means of pins 32b insertable into seats 32c of the central shaft 28.

As shown for example in figures 1-3, a second motor member 33 is operatively connected to the stirrer 27 to cause rotation about the rotation axis "A" of the blade 29 and therefore of the scraping surface R1 on at least a portion of the spherical shutter surface 16. In other words, the second motor member 33 causes scraping of the spherical shutter surface 16 at a scraping speed defined by the rotation speed of the second motor member 33 and of the stirrer 27.

The second motor member 33 may be implemented by an asynchronous or brushless motor, for example directly keyed on the central shaft 28. Alternatively, other drives may be provided, for example oleodynamic. The central shaft 28 passes through the upper section 2a and has an upper end directly keyed to the second motor member 33.

Below the outlet opening 11, the metering apparatus 1 may comprise a suction hood 2c adapted to be arranged in communication with a suction source, not shown.

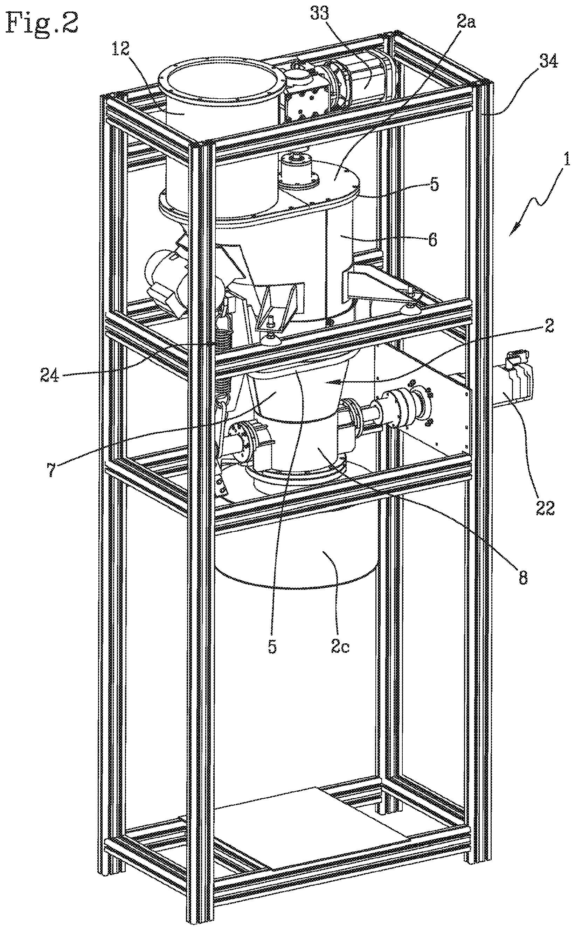

As illustrated for example in figures 1 and 2, the metering apparatus 1 is mounted on a frame 34 made so as to arrange the outlet opening 11 at a given height with respect to a support plane of the frame itself.

Below the outlet opening 11 there is provided a collecting station 35 of the ingredient falling from the storage container 2.

The collection station 35 comprises a measuring device 36 configured for detecting the amount of ingredient falling from the storage container 2, preferably a weighing device configured for detecting the weight of the ingredient falling from the storage container 2. The measuring device 36 may be implemented by a load cell to measure the weight of the collected ingredient or by means of a volumetric meter to measure the volume of the collected ingredient.

According to a possible embodiment, a metering plant 100 comprises a plurality of metering apparatuses 1, each one dedicated to a specific ingredient. The metering apparatuses 1 are substantially identical and preferably arranged in a line along a single frame 34 so as to arrange each outlet opening 11 at a given height with respect to the abutment plane of the frame and define a collection path 37 which extends between an inlet 37a and an outlet 37b. If necessary, a return path closes the entire path of the metering plant 100 in a ring.

One or more collection stations 35 may be provided which are movable along the collection path 37 by means of a conveyor 38, preferably a conveyor belt. The conveyor 38 is for example configured for intermittent movement of the collection station(s) 35 between one or more metering apparatuses 1.

The collection station 35 comprises a collection container 39 to which a collection bag is preferably associated, not shown, before the inlet 37a to the collection path 37. The collection bag is subsequently taken from the collection container 39 after the outlet 37b of the collection path 37. Alternatively, the collection station 35 may be adapted to receive a collection container 39. Furthermore, the collection station 35 may comprise sensors, not shown, configured for detecting the presence of a collection container 39 in the collection station 35 and/or below the outlet opening 11.

Reference numeral 40 indicates a control unit. Preferably, the control unit 40 is operatively connected to the measuring device 36 and/or to the first motor member 22 and/or to the second motor member 33 (figure 1).

Reference numeral 41 indicates one or more vibrators which may be associated with the storage container 2, outside of it.

In use, an ingredient of compounds, in particular for tyres, is arranged in the storage container 2.

In the presence of a collection container 39, the outlet opening 11 is at least partially opened to allow the passage of the ingredient from the storage container 2 to the collection station 35.

The amount, in particular the weight of the ingredient collected in the collection station 35 is measured by the measuring device 36. Below, reference is made to a weighing device. In particular, the weighing device is configured for generating a measurement signal "M" indicative of the weight of the ingredient collected in the collection station 35. Preferably, the weighing device is configured for generating a measurement signal "M" indicative of the attainment of at least a value of approach M1, M2, ... to a final (weight) quantity. This measurement signal "M" is sent to the control unit 40.

According to the weight of the ingredient collected in the collection station 35, the control unit 40 controls the degree of opening of the outlet opening 11 and the rotation speed of the stirrer 27, i.e. the stirring speed. Moreover, according to the example illustrated in figure 1, in which the scraping surfaces R1 are integrated into the stirrer 27, the control unit 40 also controls the scraping speed, in particular of the spherical shutter surface 16 , which coincides with the stirring speed.

The control unit 40 is in fact configured for receiving the measurement signal "M" and, depending on the weight of the ingredient collected in the collection station 35, generating a first control signal S1 and a second control signal S2. In figure 1, the signals "M", S1 and S2 are illustrated with reference to a single metering apparatus 1 for simplicity of illustration.

The first control signal S1 is addressed to the first motor member 22 and is adapted to control the angular position of the shutter body 15 and the degree of opening of the outlet opening 11. Preferably, due to the first control signal S1, the degree of opening of the outlet opening 11 is controlled. Even more preferably, due to the first control signal S1, the degree of opening of the outlet opening 11 is decreased upon approaching the final quantity M0, for example upon reaching a first value of approach M1 to the final quantity M0. Furthermore, the methods for controlling the opening degree of the outlet opening 11 are modified when at least one further value of approach to the final quantity is achieved, for example a second approach value M2 and a third approach value M3.

The second control signal S2 is addressed to the second motor member 33 and is adapted to control the rotation speed of the stirrer 27 and, according to the example just described, also the scraping speed, in particular of the spherical shutter surface 16. Preferably, due to the second control signal S2, the rotation speed of the stirrer 27 is controlled discretely. For example, by means of the second control signal S2, the rotation speed of the stirrer 27 is decreased upon approaching the final quantity M0, for example upon reaching a first value of approach M1 to the final quantity M0. Furthermore, the methods for controlling the rotation speed of the stirrer 27 are modified when at least one further value of approach to the final quantity is achieved, for example the second approach value M2 and the third approach value M3.

In use, the collection containers 39 enter the collection path 37, possibly provided with respective collection bags, and proceed along the collection path until they stop below the outlet opening 11 corresponding to the ingredient to be collected. The control unit 40, appropriately configured, manages the advancement of each collection container 39 according to the ingredients to be collected.

The control unit 40, suitably configured, calculates the maximum angular opening position of the shutter body 15 as a function of the final quantity M0 to be collected 15 in the collection station 35. Such a maximum angular opening position could coincide with the angular end-of-travel position in case of large quantities of ingredient to be collected or it could be smaller than the angular end-of-travel position in case of limited quantities of ingredient to be collected. The control unit 40, appropriately configured, also calculates at least one approach value M1, M2, ... to the final quantity M0.

For example, M0 may be 15 kg (or up to 25 kg). Depending on the type of material (and substantially independently of M0), M1 may be from 1 kg to 6 kg to M0, M2 may be about 500 g to M0 and M3 may be about 100 g to M0.

Thereafter, the control unit 40, suitably configured, generates an opening signal addressed to the first motor member 22 to cause rotation of the shutter body 15 from the angular closing position to the maximum angular opening position, such as for example shown in figure 4B. Optionally, the control unit 40 subordinates the opening signal to the receipt of a signal indicating the presence of a collection container 39, if the relative sensors are present.

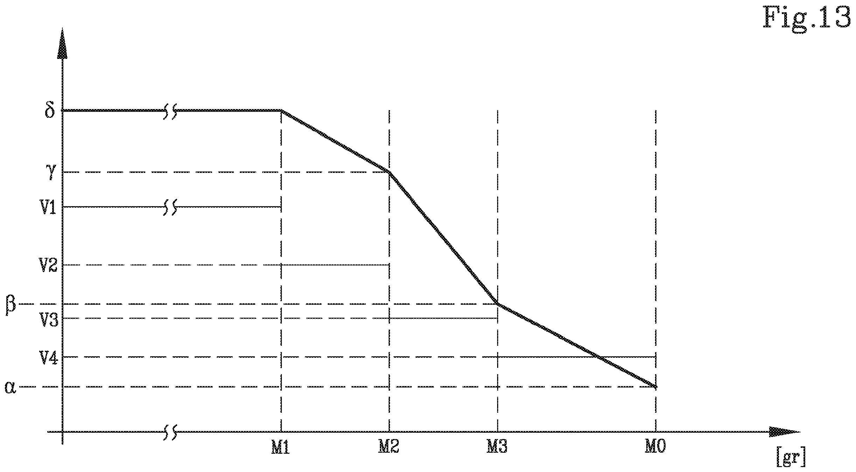

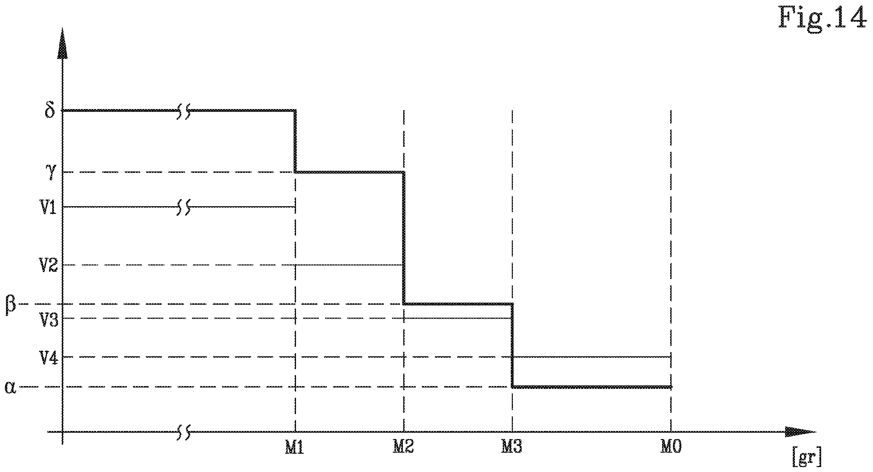

With reference to the diagram in figure 13 or 14, the abscissas show the weight of the collected ingredient, for example expressed in grams [gr]. Preferably, the abscissas show approach values M1-M3 to the final quantity (weight) M0. The ordinates show both the scraping speed (i.e. the rotation speed of the central shaft 28, preferably expressed in Hz) and the rotation angle in which the shutter body 15 is located with respect to the angular closing position expressed in degrees.

In the diagram in figure 13, the maximum angular opening position corresponds to the null value of the weight. For example, the angular maximum opening position coincides with the angular end-of-travel position corresponding to the angular position in which the closing radius 21 is arranged at an angle δ equal to 120° with respect to the position in which it is in the angular closing position (figure 4B).

With reference to the diagram in figure 13, the control unit 40 generates the first control signal S1 to progressively close the outlet opening 11 by rotating the shutter body 15 from the maximum angular opening position towards the angular closing position upon achieving the first approach value M1.

For example, the weighing device generates a measurement signal "M" indicating the achievement of a sequence of approach values M1-M3 to which corresponds a first control signal S1 which, for each approach value, modifies the closing speed of the shutter body 15.

When the measurement signal "M" indicates the achievement of a first approach value M1, the first control signal S1 causes the closing of the shutter body 15 until the second approach value M2 is achieved. In this interval, the shutter body 15 reaches a first intermediate angular position.

For example, this first intermediate angular position corresponds to the angular position in which the closing radius 21 is arranged at an angle γ smaller than δ (figure 4C).

In the first intermediate angular position, the passage surface 17, for example the third planar surface 17c , defines an outlet chute of the ingredient from the outlet opening 11.

Continuing along the abscissas of the diagram in figure 13, when the measurement signal "M" indicates the achievement of the second approach value M2, the first control signal S1 modifies the rotation speed of the shutter body 15, for example increasing it until reaching a third approach value M3. In this interval, the shutter body 15 reaches a second intermediate angular position. For example, this second intermediate angular position corresponds to the angular position in which the closing radius 21 is arranged at an angle β smaller than γ (figure 4D). Continuing along the abscissas of the diagram in figure 13, when the measurement signal "M" indicates the achievement of the third approach value M3, the first control signal S1 modifies the rotation speed of the shutter body 15, for example decreasing it until reaching the final quantity M0. In this interval, the shutter body 15 reaches a third intermediate angular position. For example, this third intermediate angular position corresponds to the angular position in which only the groove 19 faces the outlet opening 11 and the closing radius 21 is arranged at an angle α smaller than β (figure 4E).

Thereafter, the first control signal S1 causes the closing of the shutter body 15 to reach the angular closing position.

According to the alternative illustrated in figure 14, the first control signal S1 modifies the angular position of the shutter body 15 for each approach value M1-M3.

All intermediate angular positions are angular opening positions in which the outlet opening 11 has an opening surface 11a, i.e. is at least partially open. In particular, the outlet opening 11 is at least partly open on the passage surface 17. Any intermediate angular position, even different from those shown, can be calculated as the maximum angular opening position according to the weight of the ingredient to be collected in the collection station. For example, if M0 corresponds to 1-4 kg, the maximum angular opening position may be close to that shown in figure 4D (angle β).

Similarly, the control unit 40, appropriately configured, calculates a maximum rotation speed V1 of the stirrer 27, i.e. a maximum stirring speed which, in the illustrated example, corresponds to a maximum scraping speed, as a function of the weight of the ingredient to be collected in the collection station. At the same time as the opening signal, the control unit 40, appropriately configured, generates an activation signal addressed to the second motor member 33 to set the rotation of the stirrer 27 to the maximum stirring/scraping speed V1. In other words, the activation signal sets the maximum scraping speed.

With reference to the diagram in figure 13, the control unit 40 generates the second control signal S2 for modifying, for example, decreasing the stirring/scraping speed starting from the maximum stirring/scraping speed V1 upon reaching the first approach value M1.

At each approach value M1-M3, the second control signal S2 sets a certain rotation speed V2-V3, for example lower.

In particular, when the measurement signal "M" indicates the achievement of the first approach value M1, the second control signal S2 decreases the stirring/scraping speed starting from the maximum stirring/scraping speed V1 and sets a first rotation speed V2 less than the maximum speed V1.

Thereafter, when the measurement signal "M" indicates the achievement of the second approach value M2, the second control signal S2 decreases the first stirring/scraping speed V2 and sets a second stirring/scraping speed V3 lower than the first speed V2.

Thereafter, when the measurement signal "M" indicates the achievement of the third approach value M3, the second control signal S2 decreases the stirring/scraping speed and sets a third stirring/scraping speed V4 lower than the second speed V3.

In the interval in which the rotation speed V4 is set, the shutter body 15 reaches the third intermediate angular position in which only the groove 19 faces the outlet opening 11 and is such as to obtain the correct exit of the last part of the ingredient, in whatever form it is (powders, tablets, ...), in order to obtain the desired degree of accuracy.

In this position or in the neighbourhood of this position, whose open surface 11a is schematically illustrated in figure 15, the control unit 40 can modify the direction of rotation of the stirrer 27, in particular in the case where the blades 29 have a tilted orientation (figure 9) and/or mixing paddles 32a are present, so as to influence the fall of the ingredient away from the outlet opening or in thrust towards the outlet opening.

Upon reaching the final quantity M0 corresponding to the total weight, the shutter body 15 returns to the closing position and the stirrer 27 is stopped.

In alternative embodiments and operations, a scraper device 42 may be provided having at least one scraping surface R1 rotating about the rotation axis "A", preferably a plurality of scraping surfaces R1 distributed around the rotation axis "A". According to a possible example, at least four scraping surfaces are provided, even more preferably at least six scraping surfaces distributed around the rotation axis.

The scraping surface R1 is configured to scrape a surface of the metering apparatus 1 arranged in the proximity of the outlet opening 11. For example, the scraping surface R1 has a first scraping portion 30 counter-shaped with respect to the spherical shutter surface 16. Such a first scraping portion 30 is movable and active on the spherical shutter surface 16, preferably on at least a portion of a spherical cap defined by the spherical shutter surface 16 when arranged in the angular closing position. In other words, the scraper device 42 is structurally separated from the stirrer 27, as illustrated for example in figure 12, in which scraping surfaces R1, similar to those made by the blades 29, consist of the lower surface of tabs 30a distributed around the longitudinal axis "A" and rotating around it integrally with a hub 30b. Preferably, a tab has a thickness of about 3-8 mm.

In figure 12, four tabs 30a are advantageously provided. Preferably, the number of scraping surfaces is such as to cover a total surface comprised between 5% and 30% (four tabs), preferably 15% and 45% (six tabs) of the spherical shutter surface.

According to the example in figure 12, the stirring speed and the scraping speed are distinct and can be controlled independently, for example by providing a third motor member, preferably of a reversible type, dedicated to the scraper device 42 and controlled in a manner independent of the second motor member. The second control signal S2 can therefore contain separate control information intended respectively for the scraper device 42 and the stirrer 47 to operate them as described below.

In this case, the control unit 40 controls the degree of opening of the shutter opening 11 by means of the first control signal S1 as a function of the measurement signal "M" while the spherical shutter surface 16 is scraped by moving each scraping surface R1 during the passage of the ingredient from the storage container 2 through the open surface 11a.

The control unit 40 can be operatively connected to the scraper device 42 and configured for generating the second control signal S2, in this case also addressed to the third motor member of the scraper device 42. The second control signal S2 may be adapted to control the scraping speed (rotation) of the scraper device 42 itself according to the degree of opening of the outlet opening 11 (figure 1A) or according to the quantity of ingredient collected in the collection station 35 (figure 1B).

Also in this embodiment, the stirrer 27 may be provided, structurally distinct from the scraper device 42, for example comprising the mixing paddles 32a and/or the remixing arm 32. The control unit 40 can be operatively connected to the stirrer 27 and the second control signal S2, also addressed to the second motor member 33, may be adapted to control the rotation speed of the stirrer 27, i.e. the stirring speed, according to the degree of opening of the outlet opening 11 (figure 1A) or according to the quantity of ingredient collected in the collection station 35 (figure 1B). In other words, in addition to being structurally independent, the scraper device 42 and the stirrer 27 are managed independently of the control unit 40. Also in this case in the neighbourhood of the position shown in figure 4E, whose open surface 11a is schematically illustrated in figure 15, the control unit 40 can modify the direction of rotation of the stirrer 27, in particular in the case where the mixing paddles 32a are present, so as to influence the fall of the ingredient away from the outlet opening or in thrust towards the outlet opening. According to further embodiments, the scraping surface R1 may have more scraping portions, each one dedicated to a part of the apparatus.

The scraping surface R1 and in particular the relevant scraping portions that make it may be made of two or more complementary tabs 30a, 43a, i.e. co-operating with each other to form the scraping surface R1, rotating around the rotation axis "A" integrally with the hub 30b, preferably polygonal, even more preferably hexagonal. Preferably, the two or more complementary tabs are connected to the hub 30b in the same angular position with respect to the rotation axis "A", for example at the same face of the polygonal hub. Alternatively, the complementary tabs 30a, 43a are connected to different hubs and are preferably rotatable around the rotation axis "A" independently of each other.

Alternatively, the scraping surface R1 and in particular the relevant scraping portions that make it may be made of a single tab 43b, that is, a single tab 43b which forms the entire scraping surface R1, rotating around the rotation axis "A" integrally with the hub 30b, preferably polygonal, even more preferably hexagonal.

Preferably, a plurality of scraping surfaces R1 distributed around the rotation axis "A" are provided, for example six scraping surfaces R1, one for each face of the hexagonal hub 30b. Preferably, the scraping surface R1 has one or more of:
- the first scraping portion 30 counter-shaped with respect to the spherical shutter surface 16 and activatable on at least a portion of the spherical cap defined by the spherical shutter surface 16 when arranged in the angular closing position,
- a second scraping portion 30' counter-shaped with respect to the scraper ring 13 delimiting the outlet opening 11 and activatable thereon;
- a third scraping portion 30" counter-shaped with respect to internal surfaces of the storage container 2 arranged in proximity to the outlet opening 11 and activatable thereon.

Regardless of whether they are referred to as "first", "second" and "third" scraping portions, each scraping portion may be present independently of the others.

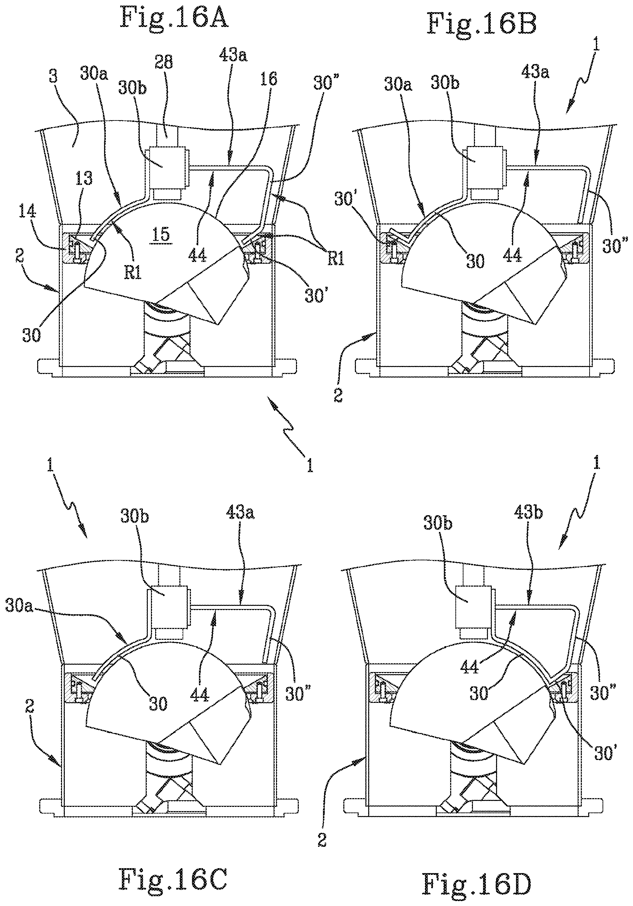

Figure 16A illustrates an embodiment comprising tabs 30a structurally similar to those illustrated in figure 12, i.e. each defining the first scraping portion 30 of the scraping surface R1 counter-shaped with respect to the spherical shutter surface 16 and activatable on at least a portion of the spherical cap defined by the spherical shutter surface 16 when disposed in the angular closing position. In addition to the tabs 30a, tabs 43a are provided, each complementary to a tab 30a in defining the scraping surface R1. The tabs 43a are made to define the second scraping portion 30' and the third scraping portion 30". Moreover, each tab 43a comprises a connecting arm 44 which projects from the hub 30b. According to a possible embodiment not illustrated, the second scraping portion 30' and the third scraping portion 30", thus the tab 43a, may be omitted.

Figure 16B illustrates an embodiment which differs from that illustrated in figure 16A in that each tab 30a defines the first scraping portion 30 and the second scraping portion 30' while each tab 43a, complementary to a tab 30a in defining the scraping surface R1, defines the third scraping portion 30" and comprises the connecting arm 44 which projects from the hub 30b. According to a possible embodiment not shown, the third scraping portion 30" and therefore the tab 43a may be omitted.

Figure 16C illustrates an embodiment which differs from that illustrated in figure 16A in that each tab 30a defines the first scraping portion 30 while each tab 43a, complementary to a tab 30a in defining the scraping surface R1, defines the third scraping portion 30" and includes the connecting arm 44 which projects from the hub 30b. In this case, therefore, the second scraping portion 30' is not provided.

Figure 16D illustrates an embodiment in which each scraping surface R1 and in particular the relevant scraping portions that compose it are made by the single tab 43b. Possibly the connecting arm 44 may be omitted.

The metering apparatus 1 in the variant described above is able, in use, to implement the method for metering ingredients of compounds, in particular for tyres, described above and further characterised in that it allows scraping a surface of the metering apparatus arranged near the outlet opening 11, and in particular the spherical shutter surface 16 facing the internal volume 3 of the storage container and/or the scraper ring 13 delimiting the outlet opening 11 and/or the internal surfaces of the storage container 2 arranged near the outlet opening itself. Said scraping is obtained during the passage of the ingredient from the storage container 2 to the collection station 35, causing rotation of the scraping surface R1, made according to one of the previously described possible embodiments.

If at least six scraping surfaces R1 are provided, the scraping speed can be kept low, thus providing that the third motor member is operated at a speed of between 5 and 20 rpm. According to a further alternative, the stirrer 27 comprises two structurally and functionally distinct units: a first unit comprises the blades 29 possibly having the respective scraping surfaces R1 and a second unit comprises the mixing paddles 32a. The blades 29 may be radial or differently oriented.

The two units can be controlled independently both as regards the value of the rotation speed and its direction. Also in this case, in fact, in the neighbourhood of the position shown in figure 4E, whose open surface 11a is schematically illustrated in figure 15, the control unit 40 can modify the direction of rotation of the blades 29, particularly if configured to influence the fall of the ingredient away from the outlet opening or in thrust towards the outlet opening. Alternatively or additionally, the control unit 40 can modify the direction of rotation of the mixing paddles 32a.

## Claims

1. Metering apparatus (1) for metering ingredients of compound, in particular for tyres, comprising:
a storage container (2) defining an internal volume (3) adapted to receive an ingredient of compounds, in particular for tyres, wherein said storage container (2) has an inlet opening (10) and an outlet opening (11),
a shutter body (15) housed in said outlet opening (11), rotating around a shutter axis (O) parallel to said outlet opening (11) and preferably staggered with respect thereto,
wherein said shutter body (15) is shaped as a portion of a rotation solid, said portion of said rotation solid being delimited by a shutter surface (16) having a convex profile facing said internal volume (3) and by a passage surface (17) which cuts said rotation solid at a single edge (18) delimiting the shutter surface (16) and the passage surface (17),
wherein said shutter body (15) is rotatable between an angular closed position in which said shutter surface (16) is arranged to completely close the outlet opening (11), and an angular open position in which said outlet opening (11) is least partially open on said passage surface (17) at an open surface (11a),
**characterized in that** the passage surface (17) comprises a skirt (19a) placed at one end of said shutter surface (16) and partially surrounding a bottom surface (17d) from which said skirt (19a) rises so as to form a cavity (I) in said passage surface (17).

2. Metering apparatus (1) as claimed in claim 1, wherein said portion of rotation solid comprises said shutter axis (O).

3. Metering apparatus (1) as claimed in claim 1 or 2, wherein said outlet opening (11) has a circular shape and said shutter body (15) is shaped as a sphere portion (S) having centre (C) arranged on said shutter axis (O), and preferably wherein said sphere portion (S) comprises said shutter axis (O).

4. Metering apparatus (1) as claimed in one or more of the preceding claims, wherein said skirt (19a) has a recess which leads into said cavity (I).

5. Metering apparatus (1) as claimed in claim 4, wherein said recess is adapted to form, in at least a position of partial angular opening of the shutter body (15), an effective portion (P1) of the open surface (11a) which has a width (L1) parallel to the shutter axis (O), having a value comparable to that of a length (L2), perpendicular to the shutter axis (O).

6. Metering apparatus (1) as claimed in claim 4 or 5, wherein said recess is formed by a groove (19) leading into said cavity (I), in which an apex (20) of the groove (19) defines a closing point of the shutter body (15) which, when lying on the plane of the outlet opening (11), or below it, corresponds to the angular closing position of the shutter body (15).

7. Metering apparatus (1) as claimed in claim 6, wherein said groove (19) is formed in a central position of the skirt (19a).

8. Metering apparatus (1) as claimed in claim 7, wherein said cavity (I) is shaped as a wedge with maximum depth at the groove (19).

9. Metering apparatus (1) as claimed in one or more of claims 6 to 8, wherein the elevation of the skirt (19a) with respect to the bottom surface (17d) is greatest at the groove (19) and such as to affect at least the whole groove itself and preferably wherein the elevation of the skirt (19a) with respect to the bottom surface (17d) is minimal, preferably zero, in a distal area with respect to the groove (19), preferably at an intermediate area of the passage surface (17).

10. Metering apparatus (1) as claimed in one or more of the preceding claims, wherein an end surface of said skirt (19a) is shaped so as to generate, at least in angular positions of the shutter body (15) proximate to the angular closing position, a circular segment configuration of the open surface (11a) of the outlet opening (11).

11. Metering apparatus (1) as claimed in one or more of claims 1 to 10, wherein an end surface of said skirt (19a) defines a first planar surface (17a) of said passage surface (17), parallel to the shutter axis (O), wherein said passage surface (17) comprises a second planar surface (17b) parallel to the shutter axis (O) and intersecting the first planar surface (17a) and wherein said end surface of said skirt (19a) defines said first planar surface (17a) and said second planar surface (17b).

12. Metering apparatus (1) as claimed in claim 11, wherein the passage surface (17) comprises a third planar surface (17c) parallel to the shutter axis (O) and intersecting the second planar surface (17b).

13. Metering apparatus (1) as claimed in one or more of the preceding claims, wherein said bottom surface (17d) is a planar surface.

14. Metering plant (100) comprising a plurality of metering apparatuses (1) as claimed in one or more of the preceding claims, each of said metering apparatuses (1) being preferably dedicated to a specific ingredient, wherein said metering apparatuses (1) are arranged so as to arrange each outlet opening (11) at a certain height with respect to a supporting plane and define a collection path (37) which extends between an inlet (37a) and an outlet (37b) and wherein at least one collection station (35) is movable along the collection path (37).

15. Shutter body (15) for a metering apparatus (1),
wherein said shutter body (15) is shaped as a portion of a rotation solid, said portion of rotation solid being delimited by a shutter surface (16) having a convex profile adapted to be facing towards an ingredient to be metered and by a passage surface (17) which cuts said rotation solid at a single edge (18) delimiting the shutter surface (16) and the passage surface (17), **characterized in that** the passage surface (17) comprises
a skirt (19a) placed at one end of said shutter surface (16) and partially surrounding a bottom surface (17d) from which said skirt (19a) rises so as to form a cavity (I) in said passage surface (17).

## Patentansprüche

1. Dosiervorrichtung (1) zum Dosieren von Bestandteilen einer Mischung, insbesondere für Reifen, umfassend:
einen Speicherbehälter (2), der ein Innenvolumen (3) definiert, das dazu ausgelegt ist, einen Bestandteil von Mischungen, insbesondere für Reifen, aufzunehmen, wobei der Speicherbehälter (2) eine Einlassöffnung (10) und eine Auslassöffnung (11) aufweist,
einen Verschlusskörper (15), der in der Auslassöffnung untergebracht ist, sich parallel zur Auslassöffnung (11) um eine Verschlussachse (O) dreht und vorzugsweise in Bezug darauf versetzt ist,
wobei der Verschlusskörper (15) als ein Abschnitt eines Rotationskörpers geformt ist, wobei der Abschnitt des Rotationskörpers durch eine Verschlussfläche mit einem konvexen Profil, die dem Innenvolumen (3) zugewandt ist, und durch eine Durchgangsfläche (17) begrenzt ist, die den Rotationskörper an einer einzigen Kante (18) schneidet, die die Verschlussfläche (16) und die Durchgangsfläche (17) begrenzt,
wobei der Verschlusskörper (15) zwischen einer geschlossenen Winkelposition, in der die Verschlussfläche (16) so angeordnet ist, dass sie die Auslassöffnung (11) vollständig schließt, und einer offenen Winkelposition, in der die Auslassöffnung (11) auf der Durchgangsfläche (17) an einer offenen Fläche (11a) zumindest teilweise offen ist, gedreht werden kann,
**dadurch gekennzeichnet, dass** die Durchgangsfläche (17) eine Einfassung (19a) umfasst, die an einem Ende der Verschlussfläche (16) platziert ist und eine Bodenfläche (17d) teilweise umgibt, von der sich die Einfassung (19a) nach oben erstreckt, um einen Hohlraum (I) in der Durchgangsfläche (17) zu bilden.

2. Dosiervorrichtung (1) nach Anspruch 1, wobei der Abschnitt des Rotationskörpers die Verschlussachse (O) umfasst.

3. Dosiervorrichtung (1) nach Anspruch 1 oder 2, wobei die Auslassöffnung (11) eine Kreisform aufweist und der Verschlusskörper (15) als ein Kugelabschnitt (S) mit einer Mitte (C) geformt ist, die auf der Verschlussachse (O) angeordnet ist, und wobei vorzugsweise der Kugelabschnitt (S) die Verschlussachse (O) umfasst.

4. Dosiervorrichtung (1) nach einem oder mehreren der vorhergehenden Ansprüche, wobei die Einfassung (19a) eine Aussparung aufweist, die in den Hohlraum (I) führt.

5. Dosiervorrichtung (1) nach Anspruch 4, wobei die Aussparung so ausgelegt ist, dass sie in mindestens einer Position einer teilweisen Winkelöffnung des Verschlusskörpers (15) einen effektiven Abschnitt (P1) der offenen Fläche (11a) bildet, der eine Breite (L1) parallel zur Verschlussachse (O) mit einem Wert aufweist, der mit dem einer Länge (L2) senkrecht zur Verschlussachse (O) vergleichbar ist.

6. Dosiervorrichtung (1) nach Anspruch 4 oder 5, wobei die Aussparung durch eine Nut (19) gebildet ist, die in den Hohlraum (I) führt, in dem ein Scheitelpunkt (20) der Nut (19) einen Schließpunkt des Verschlusskörpers (15) bildet, der, wenn er auf der Ebene der Auslassöffnung (11) oder darunter liegt, der Winkelschließposition des Verschlusskörpers (15) entspricht.

7. Dosiervorrichtung (1) nach Anspruch 6, wobei die Nut (19) in einer zentralen Position der Einfassung (19a) ausgebildet ist.

8. Dosiervorrichtung (1) nach Anspruch 7, wobei der Hohlraum (I) als Keil mit einer maximalen Tiefe an der Nut (19) geformt ist.

9. Dosiervorrichtung (1) nach einem oder mehreren der Ansprüche 6 bis 8, wobei die Erhebung der Einfassung (19a) in Bezug auf die Bodenfläche (17d) an der Nut (19) am größten und derart ist, dass sie zumindest die gesamte Nut selbst beeinflusst, und wobei vorzugsweise die Erhebung der Einfassung (19a) in Bezug auf die Bodenfläche (17d) in einem distalen Bereich in Bezug auf die Nut (19), vorzugsweise in einem Zwischenbereich der Durchgangsfläche (17), minimal, vorzugsweise null, ist.

10. Dosiervorrichtung (1) nach einem oder mehreren der vorhergehenden Ansprüche, wobei eine Endfläche der Einfassung (19a) so geformt ist, dass sie zumindest in Winkelpositionen des Verschlusskörpers (15) in der Nähe der Schließwinkelposition eine Konfiguration eines kreisförmigen Segments der offenen Fläche (11a) der Auslassöffnung (11) erzeugt.

11. Dosiervorrichtung (1) nach einem oder mehreren der Ansprüche 1 bis 10, wobei eine Endfläche der Einfassung (19a) eine erste ebene Fläche (17a) der Durchgangsfläche (17) parallel zur Verschlussachse (O) definiert, wobei die Durchgangsfläche (17) eine zweite ebene Fläche (17b) umfasst, die parallel zur Verschlussachse (O) ist und die erste ebene Fläche (17a) schneidet, und wobei die Endfläche der Einfassung (19a) die erste ebene Fläche (17a) und die zweite ebene Fläche (17b) definiert.

12. Dosiervorrichtung (1) nach Anspruch 11, wobei die Durchgangsfläche (17) eine dritte ebene Fläche (17c) umfasst, die parallel zur Verschlussachse (O) ist und die zweite ebene Fläche (17b) schneidet.

13. Dosiervorrichtung (1) nach einem oder mehreren der vorhergehenden Ansprüche, wobei die Bodenfläche (17d) eine ebene Fläche ist.

14. Dosieranlage (100), umfassend eine Mehrzahl von Dosiervorrichtungen (1) nach einem oder mehreren der vorhergehenden Ansprüche, wobei jede der Dosiervorrichtungen (1) vorzugsweise für einen spezifischen Bestandteil bestimmt ist, wobei die Dosiervorrichtungen (1) so angeordnet sind, dass sie jede Auslassöffnung (11) in einer bestimmten Höhe in Bezug auf die Auflageebene anordnen und einen Sammelweg (37) definieren, der sich zwischen einem Einlass (37a) und einem Auslass (37b) erstreckt, und wobei mindestens eine Sammelstation (35) entlang des Sammelwegs (37) bewegt werden kann.

15. Verschlusskörper (15) für eine Dosiervorrichtung (1),
wobei der Verschlusskörper (15) als ein Abschnitt eines Rotationskörpers geformt ist, wobei der Abschnitt des Rotationskörpers durch eine Verschlussfläche mit einem konvexen Profil, die so ausgelegt ist, dass sie einem zu dosierenden Bestandteil zugewandt ist, und durch eine Durchgangsfläche (17) begrenzt ist, die den Rotationskörper an einer einzigen Kante (18) schneidet, die die Verschlussfläche (16) und die Durchgangsfläche (17) begrenzt,
**dadurch gekennzeichnet, dass** die Durchgangsfläche (17) eine Einfassung (19a) umfasst, die an einem Ende der Verschlussfläche (16) platziert ist und eine Bodenfläche (17d) teilweise umgibt, von der sich die Einfassung (19a) nach oben erstreckt, um einen Hohlraum (I) in der Durchgangsfläche (17) zu bilden.

## Revendications

1. Appareil de dosage (1) pour doser les ingrédients d'un composé, en particulier pour les pneus, comprenant :
un récipient de stockage (2) définissant un volume interne (3) adapté pour recevoir un ingrédient de composés, en particulier pour les pneus, où ledit récipient de stockage (2) a une ouverture d'entrée (10) et une ouverture de sortie (11),
un corps d'obturateur (15) logé dans ladite ouverture de sortie (11), tournant autour d'un axe d'obturateur (O) parallèle à ladite ouverture de sortie (11) et de préférence décalé par rapport à celle-ci,
dans lequel ledit corps d'obturateur (15) est façonné comme une partie d'un solide de rotation, ladite partie dudit solide de rotation étant délimitée par une surface d'obturateur (16) ayant un profil convexe faisant face audit volume interne (3) et par une surface de passage (17) qui coupe ledit solide de rotation au niveau d'un bord unique (18) délimitant la surface d'obturateur (16) et la surface de passage (17),
dans lequel ledit corps d'obturateur (15) peut tourner entre une position angulaire fermée dans laquelle ladite surface d'obturateur (16) est agencée pour fermer complètement l'ouverture de sortie (11), et une position angulaire ouverte dans laquelle ladite ouverture de sortie (11) est au moins partiellement ouverte sur ladite surface de passage (17) au niveau d'une surface ouverte (11a),
**caractérisé en ce que** la surface de passage (17) comprend une jupe (19a) placée au niveau d'une extrémité de ladite surface d'obturateur (16) et entourant partiellement une surface inférieure (17d) à partir de laquelle s'élève ladite jupe (19a) de manière à former une cavité (I) dans ladite surface de passage (17).

2. Appareil de dosage (1) tel que revendiqué dans la revendication 1, dans lequel ladite partie du solide de rotation comprend ledit axe d'obturateur (O).

3. Appareil de dosage (1) tel que revendiqué dans la revendication 1 ou 2, dans lequel ladite ouverture de sortie (11) a une forme circulaire et ledit corps d'obturateur (15) est façonné comme une partie de sphère (S) ayant un centre (C) agencé sur ledit axe d'obturateur (O), et de préférence dans lequel ladite partie de sphère (S) comprend ledit axe d'obturateur (O).

4. Appareil de dosage (1) tel que revendiqué dans une ou plusieurs des revendications précédentes, dans lequel ladite jupe (19a) a un évidement qui mène dans ladite cavité (I).

5. Appareil de dosage (1) tel que revendiqué dans la revendication 4, dans lequel ledit évidement est adapté pour former, dans au moins une position d'ouverture angulaire partielle du corps d'obturateur (15), une partie efficace (P1) de la surface ouverte (11a) qui a une largeur (L1) parallèle à l'axe d'obturateur (O), ayant une valeur comparable à celle d'une longueur (L2), perpendiculaire à l'axe d'obturateur (O).

6. Appareil de dosage (1) tel que revendiqué dans la revendication 4 ou 5, dans lequel ledit évidement est formé par une rainure (19) menant dans ladite cavité (I), où un sommet (20) de la rainure (19) définit un point de fermeture du corps d'obturateur (15) qui, lorsqu'il se trouve sur le plan de l'ouverture de sortie (11), ou en dessous de celle-ci, correspond à la position de fermeture angulaire du corps d'obturateur (15).

7. Appareil de dosage (1) tel que revendiqué dans la revendication 6, dans lequel ladite rainure (19) est formée dans une position centrale de la jupe (19a).

8. Appareil de dosage (1) tel que revendiqué dans la revendication 7, dans lequel ladite cavité (I) est façonnée comme un coin avec une profondeur maximale au niveau de la rainure (19).

9. Appareil de dosage (1) tel que revendiqué dans une ou plusieurs des revendications 6 à 8, dans lequel l'élévation de la jupe (19a) par rapport à la surface inférieure (17d) est la plus grande au niveau de la rainure (19) et de manière à affecter au moins la totalité de la rainure elle-même et de préférence dans lequel l'élévation de la jupe (19a) par rapport à la surface inférieure (17d) est minimale, de préférence nulle, dans une zone distale par rapport à la rainure (19), de préférence au niveau d'une zone intermédiaire de la surface de passage (17).

10. Appareil de dosage (1) tel que revendiqué dans une ou plusieurs des revendications précédentes, dans lequel une surface d'extrémité de ladite jupe (19a) est façonnée de manière à générer, au moins dans des positions angulaires du corps d'obturateur (15) à proximité de la position de fermeture angulaire, une configuration de segment circulaire de la surface ouverte (11a) de l'ouverture de sortie (11).

11. Appareil de dosage (1) tel que revendiqué dans une ou plusieurs des revendications 1 à 10, dans lequel une surface d'extrémité de ladite jupe (19a) définit une première surface plane (17a) de ladite surface de passage (17), parallèle à l'axe d'obturateur (O), dans lequel ladite surface de passage (17) comprend une deuxième surface plane (17b) parallèle à l'axe d'obturateur (O) et coupant la première surface plane (17a) et dans lequel ladite surface d'extrémité de ladite jupe (19a) définit ladite première surface plane (17a) et ladite deuxième surface plane (17b).

12. Appareil de dosage (1) tel que revendiqué dans la revendication 11, dans lequel la surface de passage (17) comprend une troisième surface plane (17c) parallèle à l'axe d'obturateur (O) et coupant la deuxième surface plane (17b).

13. Appareil de dosage (1) tel que revendiqué dans une ou plusieurs des revendications précédentes, dans lequel ladite surface inférieure (17d) est une surface plane.

14. Installation de dosage (100) comprenant une pluralité d'appareils de dosage (1) tels que revendiqués dans une ou plusieurs des revendications précédentes, chacun desdits appareils de dosage (1) étant de préférence dédié à un ingrédient spécifique, où lesdits appareils de dosage (1) sont agencés de manière à agencer chaque ouverture de sortie (11) à une certaine hauteur par rapport à un plan de support et définir un chemin de collecte (37) qui s'étend entre une entrée (37a) et une sortie (37b) et où au moins un poste de collecte (35) est mobile le long du chemin de collecte (37).

15. Corps d'obturateur (15) pour un appareil de dosage (1),
dans lequel ledit corps d'obturateur (15) est façonné comme une partie d'un solide de rotation, ladite partie du solide de rotation étant délimitée par une surface d'obturateur (16) ayant un profil convexe adapté pour être orienté vers un ingrédient à doser et par une surface de passage (17) qui coupe ledit solide de rotation au niveau d'un bord unique (18) délimitant la surface d'obturateur (16) et la surface de passage (17),
**caractérisé en ce que** la surface de passage (17) comprend une jupe (19a) placée au niveau d'une extrémité de ladite surface d'obturateur (16) et entourant partiellement une surface inférieure (17d) à partir de laquelle s'élève ladite jupe (19a) de manière à former une cavité (I) dans ladite surface de passage (17).
